# EUROPÄISCHE PATENTANMELDUNG

(11) **EP 4 455 239 A1**
(43) Veröffentlichungstag der Anmeldung: **30.10.2024**
(21) Anmeldenummer: 24168646.8
(22) Anmeldetag: 05.04.2024
(51) Int. Cl.: C09J 5/00, C09J 7/38

(54) **CHEMIKALIENBESTÄNDIGES, REAKTIVES HAFTKLEBEBAND**

(30) Priorität: 28.04.2023 DE 102023111055
(71) Anmelder: tesa SE, 22848 Norderstedt (DE)
(72) Erfinder: SCHUH, Christian, Norderstedt (DE); LOSSADA, Francisco, Norderstedt (DE); KRUSKOP, Bastian, Norderstedt (DE); KUPSKY, Marco, Norderstedt (DE); NAUJOKS, Lena-Marie, Norderstedt (DE); WEDEL, Nadine, Norderstedt (DE)
(74) Vertreter: tesa SE

(57) **Zusammenfassung**

Die Erfindung betrifft ein chemikalienbeständiges, reaktives Haftklebeband mit einer Reaktivklebemasse umfassend mindestens eine Epoxidverbindung, mindestens einen Initiator zur Aushärtung der Epoxidverbindung, und ein Poly(meth)acrylat, welches einen hohen Anteil von mindestens 55 Gewichtsprozent an Monomeren mit aromatischen Resten enthält.

## Beschreibung

Die Erfindung betrifft ein chemikalienbeständiges, reaktives Haftklebeband und die Verwendung entsprechender reaktiver Haftklebebänder zur Verklebung von zwei oder mehr Komponenten.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar. Aus dem Alltag sind insbesondere Haftklebebänder bekannt, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Insbesondere für den Einsatz in der industriellen Fertigungstechnik ist jedoch auch eine weitere Art von Klebebändern von großer Bedeutung. In diesen Klebebändern, die teilweise auch als reaktive (Haft)Klebebänder bezeichnet werden, wird eine aushärtbare Klebemasse, die manchmal auch als Reaktivklebemasse bezeichnet werden, eingesetzt. Entsprechende aushärtbare Klebemassen bzw. Reaktivklebemasse haben in dem für die Applikation vorgesehenen Zustand noch nicht ihren maximalen Vernetzungsgrad erreicht und können durch äußere Einflüsse ausgehärtet werden, indem die Polymerisation in der Reaktivklebemasse initiiert und dadurch der Vernetzungsgrad erhöht wird. Hierbei verändern sich die mechanischen Eigenschaften der nunmehr ausgehärteten Klebemasse, wobei insbesondere die Viskosität, die Oberflächenhärte und die Festigkeit zunehmen.

Reaktivklebemassen sind im Stand der Technik bekannt und können aus chemischer Sicht sehr unterschiedliche Zusammensetzungen aufweisen. Diesen Reaktivklebemassen ist gemein, dass die Vernetzungsreaktion durch externe Einflussfaktoren ausgelöst werden kann, beispielsweise durch Energiezufuhr, insbesondere durch Temperatur-, Plasma- oder Strahlenhärtung, und/oder den Kontakt mit einer die Polymerisation fördernden Substanz, wie es beispielsweise bei feuchtigkeitshärtenden Klebemassen der Fall ist. Beispielhafte Klebemassen sind beispielsweise in der DE 102015222028 A1, EP 3091059 A1, EP 3126402 B1, EP 2768919 B1, DE 102018203894 A1, WO 2017174303 A1 und US 4661542 A offenbart.

Ein industriell besonders relevanter Typ von Reaktivklebemassen sind Massen die kationisch härtbaren Epoxidkomponenten umfassen. Durch die Handhabungs- und Anwendungseigenschaften ebenso wie die realisierbaren Klebeeigenschaften solcher Reaktivklebemasse werde solche Klebebänder für eine große Bandbreite an industriellen Anwendungen als besonders vorteilhaft angesehen. Haftklebebänder mit Reaktivklebemassen, welche kationisch härtbaren Epoxidkomponenten umfassen, sind besonders vorteilhaft, da sie sich wesentlich einfacher und positionsgenauer applizieren lassen als Flüssigklebstoffe. Außerdem können solchen Reaktivklebemassen nach der Härtung als Strukturklebstoff oder semistrukturelle Klebstoffe fungieren. Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: "bonding agents used for transferring required loads between adherends exposed to service environments typical for the structure involved"). Es sind also Klebstoffe für chemisch und physikalisch hoch beanspruchbare Klebungen, die im ausgehärteten Zustand zur Verfestigung der Klebebänder beitragen.

Reaktive Haftklebebänder sind dem Fachmann wohlbekannt. So offenbart die WO 2023/274875 A1 Reaktivklebebänder umfassend eine Folie, eine erste äußere Reaktivklebmasse und eine zweite äußere Reaktivklebmasse, wobei zumindest eine der Reaktivklebmassen eine Reaktivkomponente wie ein Epoxidharz, einen Photoinitiator, ein oder mehrere Schäumungsmittel und mehr als 60,0 Gew.-% eines Polymers umfasst und wobei Reaktivklebmasse geschäumt ist. Bei diesen Klebebändern ist die Stanzbarkeit durch die Verwendung einer Folie in Kombination mit einer geschäumten Klebmasse verbessert.

Die US 10,676,655 B2 offenbart einen härtbaren Haftklebstoff, der beim Härten einen semistrukturellen oder strukturellen Klebstoff bereitstellt, welcher verbesserte Kaltfließeigenschaften und außergewöhnlichen Hafteigenschaften aufweist und welcher a) ein Tetrahydrofurfuryl(meth)acrylat-Copolymer, b) ein Epoxidharz, c) ein Polyetherpolyol, d) ein hydroxyfunktionelles filmbildendes Polymer, und (e) einen kationischen Photoinitiator umfasst.

Die WO 2017/174303 A1 beschreibt ein haftklebriges Klebeband, das eine strahlenaktivierbare polymerisierbare Zusammensetzung enthält, die ihrerseits
A 5 bis 60 Gew.-Teile wenigstens einer Filmbildner-Komponente;
B 40 bis 95 Gew.-Teile wenigstens einer Epoxid-Komponente;
C 0,1 bis 10 Gew.-Teile wenigstens eines Photoinitiators, sowie
D optional 0,1 bis 200 Gew.-Teile wenigstens eines Zusatzstoffs,
enthält, jeweils bezogen auf die strahlenaktivierbare polymerisierbare Zusammensetzung, wobei sich die Gew.-Teile der Komponente A und B zu 100 ergänzen, und die dadurch gekennzeichnet ist, dass die Filmbildner-Komponente A zumindest ein Polyurethan-Polymer umfasst. Diese strahlenaktivierbare polymerisierbare Zusammensetzung soll eine ausreichende Offenzeit von wenigstens einer Minute aufweisen und eine zufriedenstellende Dunkelreaktion nach einer Strahlenaktivierung sowie eine gute finale Verklebungsfestigkeit von mindestens 2 MPa auf Stahl zeigen.

EP 3091059 A1 offenbart ein haftklebriges Klebeband, enthaltend eine (semi-)strukturelle Klebemasse enthaltend mindestens ein Polymer, optional ein Klebharz, mindestens ein Reaktivharz, wobei die Klebemasse auf 100 Teile Polymer und Klebharz mindestens 104 Teile des mindestens einen Reaktivharzes enthält, und mindestens einen Initiator und/oder Härter und/oder Beschleuniger, wobei das Klebeband nach der Aushärtung deutlich höhere Scherfestigkeiten als andere Klebebänder/Klebemasse des Standes der Technik zeigt.

Solche Reaktivklebemassen bzw. Haftklebebänder enthaltend Reaktivklebemasse eignen sich insbesondere für miniaturisierte Anwendungen, wie sie beispielsweise in der Elektronikindustrie gefordert sind. Hier kommt es immer mehr darauf an, die Verbindungen zwischen den Bauteilen sehr präzise und platzsparend zu realisieren. Zudem steigen wegen der weltweit immer noch erheblichen Nachfrage nach Kommunikations- und Unterhaltungselektronik auch die Anforderungen an die Leistungsfähigkeit der Geräte stetig, so dass auch die verwendeten Klebebänder ständig neuen, zumindest aber wachsenden Anforderungen an ihre Performance unterliegen. Insbesondere wird es - beispielsweise durch die Entwicklung von am Körper getragenen elektronischen Geräten (so genannten Wearables) wie etwa Smart-Watches - immer wichtiger, dass die dort verwendeten Verklebungen neben den hohen Verklebungsfestigkeiten (wie von (semi-) strukturellen Klebstoffen erwartet) auch eine hohe Resistenz gegenüber verschiedenen Chemikalien (wie zum Beispiel Schweiß, Hautfett oder Talg, Sonnenschutzcreme oder kosmetische Hautpflegemittel aufweisen). Diese Beständigkeit gegenüber Chemikalien (sogenannte "chemical resistance") wird dadurch simuliert, dass die ausgehärteten Haftklebebänder auch nach längerer Lagerung in verschiedenen Medien eine annehmbare Verklebungsfestigkeit aufweisen und idealerweise kaum bis gar nicht an Verklebungsfestigkeit verlieren. Ähnliche Anforderungen werden auch vermehrt an andere elektronische Geräte wie Smartphones, Tablets, Notebooks, Kameras, Videokameras, Tastaturen und Touchpads gestellt.

Die aus den oben genannten Offenbarungen bekannten Klebemasse weisen im ausgehärteten Zustand zwar eine ausreichend hohe Verklebungsfestigkeit auf, jedoch ist die Beständigkeit gegenüber Chemikalien (chemische Beständigkeit) nur in geringem Maße vorhanden. Im Lichte der vorstehenden Ausführungen besteht ein großer Bedarf nach Haftklebebändern, die eine verbesserte chemische Beständigkeit aufweisen. Dabei ist natürlich ebenso zu beachten, dass die (End)verklebungsfestigkeit, die Stanzbarkeit sowie die initiale Haftklebrigkeit zumindest auf gleichem Niveau erhalten bleiben sollte.

Die primäre Aufgabe der vorliegenden Erfindung war es, die vorstehend beschriebenen Nachteile des Standes der Technik zu beseitigen oder zumindest zu verringern.

Insbesondere war es die Aufgabe der vorliegenden Erfindung, ein reaktives Haftklebeband bereitzustellen, welches eine verbesserte chemische Beständigkeit, beispielsweise gegenüber Schweiß, Hautfett oder Talg, Sonnenschutzcreme oder kosmetische Hautpflegemittel bzw. gegenüber einer Mischung aus Isopropanol / Wasser aufweist. Häufig wird in der Entwicklung von Klebebändern eine Mischung aus Isopropanol / Wasser 7:3 gewählt, um Klebemassen auf ihre chemische Beständigkeit gegenüber polaren Lösungsmitteln hin zu optimieren. Diese Mischung ist demnach ein sogenannter Gatekeeper, der zu bestehen ist, bevor das volle Spektrum an unterschiedlichen Chemikalien getestet wird.

Es war eine weitere Aufgabe der vorliegenden Erfindung, ein reaktives Haftklebeband bereitzustellen, welche neben einer ausreichenden oder verbesserten chemischen Beständigkeit noch eine hohe oder verbesserte Verklebungsfestigkeit aufweist.

Eine weitere Aufgabe der vorliegenden Erfindung war es ein reaktives Haftklebeband bereitzustellen, welches eine gute bzw. verbesserte (initiale) Haftklebrigkeit aufweist und gleichzeitig eine ausreichende oder verbesserte chemische Beständigkeit besitzt.

Eine weitere Aufgabe der vorliegenden Erfindung war es ein reaktives Haftklebeband bereitzustellen, welches im ausgehärteten Zustand eine hohe oder verbesserte Verklebungsfestigkeit aufweist.

Zudem war es eine sekundäre Aufgabe der vorliegenden Erfindung, eine Verwendung der anzugebenden reaktiven Haftklebebänder zur Verklebung von zwei oder mehr Komponenten bereitzustellen.

Die Erfinder der vorliegenden Erfindung haben nunmehr gefunden, dass sich die vorstehend beschriebenen Aufgaben überraschenderweise lösen lassen, wenn in der Reaktivklebemasse für das erfindungsgemäße reaktive Haftklebeband als Basis ein Poly(meth)acrylat, welches einen hohen Anteil von mindestens 55 Gewichtsprozent an Monomeren mit aromatischen Resten, wie Phenyl, Phenylen, Naphthyl oder Naphthylen, wobei Phenyl oder Phenylen besonders bevorzugt ist, in Kombination mit mindestens einer Epoxidverbindung und mindestens einem Initiator zur Aushärtung der Reaktivklebemasse eingesetzt wird, wie es in den Ansprüchen definiert ist.

Die Erfinder haben überraschenderweise und entgegen ihren Erwartungen festgestellt, dass diese Anteile und auch sehr hohe Anteile (75 Gew.-% oder 100 Gew.-%) an aromatischen Resten im Poly(meth)acrylat zu einer verbesserten chemischen Beständigkeit des Gesamtsystems der reaktiven Klebemassen führen, so dass die erfindungsgemäßen reaktiven Haftklebebänder eine verbesserte chemische Beständigkeit aufweisen. Zusätzlich haben die Erfinder überraschenderweise festgestellt, dass die initiale Haftklebrigkeit des erfindungsgemäßen reaktiven Haftklebebandes mit der Reaktivklebemasse auf Basis des Poly(meth)acrylats mit einem Anteil von mindestens 55 Gewichtsprozent an Monomeren mit aromatischen Resten ausreichend hoch ist und die Applikation (und Repositionierung) während der Verwendung zum Verkleben zweier Komponenten sehr gut gelingt. Zum Schluss haben die Erfinder überraschenderweise festgestellt, dass die Verklebungsfestigkeiten der erfindungsgemäßen reaktiven Haftklebebänder (nach Aushärtung) ausreichend hoch sind um nach der Härtung als (semi-)struktureller Klebstoff zu fungieren. Dies ist insbesondere überraschend, weil den Erfindern für (semi-)strukturelle Klebstoffe, die 2-Phenoxyethylacrylat als Monomer enthalten, nur niedrige Verklebungsfestigkeiten bekannt sind.

Der Begriff "(semi-)struktureller Klebstoff" oder "(semi-)strukturelle Klebstoffe" umfasst die "semi-strukturellen Klebstoffe" und die "strukturellen Klebstoffe". "Semi-strukturelle Klebstoffe" sind solche gehärteten Klebstoffe, die im Zugschertest eine Zugscherfestigkeit von mindestens 1,0 MPa und bevorzugter mindestens etwa 1,5 MPa (jeweils auf Stahl) aufweisen. Als "strukturelle Klebstoffe" oder "Strukturklebstoffe" werden solche ausgehärteten Klebstoffe bezeichnet, die eine besonders hohe Zugscherfestigkeit aufweisen und die im Zugschertest eine Zugscherfestigkeit von mindestens 5 MPa, bevorzugter von mindestens 7 MPa und besonders bevorzugt von mindestens 10 MPa (jeweils auf Stahl) aufweisen.

Ohne an eine bestimmte Theorie gebunden zu sein, glauben die Erfinder, dass sich die Kombination aus (a) Poly(meth)acrylat, welches einen hohen Anteil von mindestens 55 Gewichtsprozent an Monomeren mit aromatischen Resten, (b) mindestens einer Epoxidverbindung und (c) mindestens einem Initiator synergistisch in der Reaktivklebemasse der erfindungsgemäßen reaktiven Haftklebebänder auf die chemische Beständigkeit, die initiale Haftklebrigkeit und die Verklebungsfestigkeit auswirkt.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Die Erfindung betrifft ein reaktives Haftklebeband umfassend mindestens eine Reaktivklebemasse enthaltend

eine Basismasse, wobei die Basismasse
(a) 35 Gew.-% bis 80 Gew.-% mindestens eines Poly(meth)acrylats, und
(b) 20 Gew.-% bis 65 Gew.-% mindestens einer Epoxidverbindung,
   enthält,
   wobei die Gesamtmenge an Poly(meth)acrylaten und Epoxidverbindungen in der Basismasse 100 Gew.-% ergibt;
   und wobei die Reaktivklebemasse zusätzlich
(c) 0,1 Gew.-% bis 5 Gew.-%, bezogen auf 100 Gew.-% der Basismasse, mindestens eines Initiators, insbesondere Photoinitiators, zur Aushärtung der Epoxidverbindung umfasst;
dadurch gekennzeichnet, dass
das Poly(meth)acrylat auf eine Monomerzusammensetzung zurückzuführen ist, die
(i) 55 Gew.-% bis 100 Gew.-% eines oder mehrerer Monomere ausgewählt aus der Gruppe bestehend aus
   a. einem oder mehreren Monomeren der Formel (I) 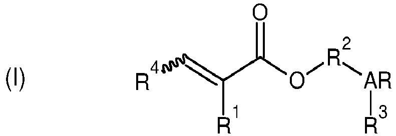
      worin R¹ für ein Wasserstoffatom oder eine Methylgruppe,
      R² für eine unsubstituierte, lineare oder verzweigte C₁-C₂₂-Alkylkette,
      AR für einen aromatischen Rest,
      R³ für H, eine unsubstituierte, lineare oder verzweigte C₁-C₅-Alkylkette, eine Hydroxygruppe, C₁-C₁₀-Alkoxygruppe oder Aryloxygruppe, und
      R⁴ für H oder einen Phenylring steht,
   b. einem oder mehreren Monomeren der Formel (II) 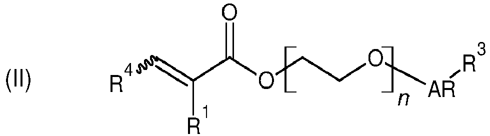
      worin R¹ für ein Wasserstoffatom oder eine Methylgruppe,
      AR für einen aromatischen Rest,
      R³ für H, eine unsubstituierte, lineare oder verzweigte C₁-C₅-Alkylkette, eine Hydroxygruppe, C₁-C₁₀-Alkoxygruppe oder Aryloxygruppe, und
      R⁴ für H oder einen Phenylring steht, und n = 0 bis 10 ist,
   c. Styrol, und
   d. Methylstyrol; und
(ii) 0 Gew.-% bis 45 Gew.-% eines oder mehrerer Comonomere, wobei das Comonomer oder die Comonomere ausgewählt sind aus der Gruppe der (Meth)acrylat-Monomere und copolymerisierbaren Vinylmonomere, und wobei das Comonomer oder die Comonomere nicht den Monomeren der Formel (I), den Monomeren der Formel (II), Styrol und Methylstyrol entsprechen,
   umfasst oder daraus besteht, wobei die Gewichtsanteile jeweils auf das Gesamtgewicht der Monomerzusammensetzung bezogen sind.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verwendungen und Verfahren ergeben sich aus den Merkmalen bevorzugter reaktiver Haftklebebänder.

Zum Zwecke einer bestmöglichen Verarbeitbarkeit beim Endanwender weist die Reaktivklebemasse der vorliegenden Erfindung haftklebrige Eigenschaften bzw. eine intrinsische Haftklebrigkeit auf. Die Reaktivklebmasse kann somit als Haftklebemasse klassifiziert werden kann. Die Haftklebrigkeit erlaubt vor der Aushärtung eine zuverlässige und sichere Applikation der reaktiven Haftklebebänder am Substrat.

Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet. Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) • sin(δ) (τ = Schubspannung, γ = Deformation, δ = Phasenwinkel = Phasenverschiebung zwischen Schubspannungs- und Deformationsvektor).

Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec sowohl G` als auch G" zumindest zum Teil im Bereich von 10³ bis 10⁷ Pa liegen. "Zum Teil" heißt, dass zumindest ein Abschnitt der G'-Kurve innerhalb des Fensters liegt, das durch den Deformationsfrequenzbereich von einschließlich 10° bis einschließlich 10¹ rad/sec (Abszisse) sowie den Bereich der G'-Werte von einschließlich 10³ bis einschließlich 10⁷ Pa (Ordinate) aufgespannt wird, und wenn zumindest ein Abschnitt der G"-Kurve ebenfalls innerhalb des entsprechenden Fensters liegt. Zur Vereinfachung definieren die Erfinder, dass ein reaktives Haftklebeband im Sinne der vorliegenden Erfindung eine Klebkraft im unausgehärteten Zustand von wenigstens 1 N/cm besitzt und es nahezu rückstandsfrei entfernt wird (d.h. adhäsives Versagen im Test). Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 µm verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergibt sich als Mittelwert aus drei Einzelmessungen. Kohäsives Versagen in diesem Test zeigen bei Raumtemperatur klebrige Klebstoffe oder Klebebänder, deren Kohäsion nicht ausreichend für ein rückstandfreies Entfernen ist. Solche Klebstoffe oder Klebebänder sind im Sinne der Erfindung keine Haftklebstoffe.

Die erfindungsgemäßen reaktiven Haftklebebänder weisen eine gute oder eine sehr gute Beständigkeit gegenüber Chemikalien (sogenannte "chemical resistance") auf und sind in dieser Hinsicht bekannten reaktiven Haftklebebänder aus dem Stand der Technik regelmäßig überlegen, die häufig keinerlei chemische Beständigkeit zeigen. Die chemische Beständigkeit zeichnet sich insbesondere dadurch aus, dass auch die entsprechend gelagerten Haftklebebänder zu Verklebungen führen, deren Eigenschaften nach der Verklebung, insbesondere deren Verklebungsfestigkeiten, sehr gut sind. Haftklebebänder, die schlechtere chemische Beständigkeit besitzen, führen hingegen zu Verklebungsprodukten mit geringerer Stabilität, wenn das Verklebungsprodukt solchen Bedingungen ausgesetzt wird.

Die erfindungsgemäßen reaktiven Haftklebebänder zeigen eine gute Chemikalienbeständigkeit mit entsprechenden Werten im (weiter unten beschriebenen) Push-Out-Test von mindestens 0,1 MPa nach einer Lagerung für 72 h bei 65 °C in Isopropanol/Wasser (70 % Volumenanteile / 30 % Volumenanteile). Bevorzugt zeigen sie eine sehr gute Chemikalienbeständigkeit mit entsprechenden Werten im (weiter unten beschriebenen) Push-Out-Test von mindestens 0,5 MPa und besonders bevorzugt zeigen sie eine hervorragende Chemikalienbeständigkeit mit entsprechenden Werten im (weiter unten beschriebenen) Push-Out-Test von mindestens 1 MPa, beides nach einer Lagerung für 72 h bei 65 °C in Isopropanol/Wasser (70 / 30).

Der Begriff "Poly(meth)acrylat" umfasst erfindungsgemäß sowohl Polymere auf Basis von Estern der Acrylsäure als auch solche auf Basis von Estern der Acrylsäure und Methacrylsäure als auch solche auf Basis von Estern der Methacrylsäure. Die Begriffe "(Meth)Acrylsäureester" und "(Meth)acrylat-" umfassen erfindungsgemäß sowohl Acrylsäureester als auch Methacrylsäureester bzw. sowohl Acrylate als auch Methacrylate.

Die Reaktivklebemasse des erfindungsgemäßen reaktiven Haftklebebands umfasst eine Basismasse, welche durch die Gesamtmenge an Poly(meth)acrylaten und Epoxidverbindungen definiert ist.

Das Gesamtgewicht der Bestandteile der Basismasse der Reaktivklebemeasse steht hier und im Folgenden somit für die gesamte Menge an eingesetzten Polymethacrylaten und Epoxidverbindungen, die als Summe in Gewichtsprozent (Gew.-%) erhalten wird und 100 Gew.-% entspricht bzw. die sich immer auf 100 Gewichtsprozent aufsummieren.

Dies bedeutet, dass in nachfolgend offenbarten Ausführungsformen, in denen beispielsweise für die Poly(meth)acrylate gemäß (i) bevorzugte Ausgestaltungen offenbart werden, auch sonstige, nicht-bevorzugte Poly(meth)acrylate in der erfindungsgemäßen Klebemasse für die Berechnung der Gewichtsanteile unverändert herangezogen werden müssen, da auch diese einen Teil der Basismasse bilden.

Bevorzugt besteht die Basismasse dabei aus den näher definierten Poly(meth)acrylaten und Epoxidverbindungen, sodass insbesondere Poly(meth)acrylate, die nicht auf die Monomerzusammensetzung aus (i) und (ii) jeglicher Ausführungsformen und Ausgestaltungen zurückzuführen sind, bevorzugt keine Bestandteile der Basismasse sind.

Gegebenenfalls weitere optional vorliegende Bestandteile, wie Lösemittel beziehungsweise Wasser, dienen nur der Herstellung und werden in dieser Betrachtung nicht zum Gesamtgewicht der Bestandteile der Basismasse der erfindungsgemäßen Klebemasse oder des erfindungsgemäßen Klebstofffilms gezählt. Das gilt auch für Lösemittel, die gegebenenfalls in den kommerziell erhältlichen Rohstoffen bereits enthalten sind. Ferner wird die Menge an eventuell enthaltenen Additiven, wie unten beschrieben, nicht zu den 100 Gewichtsprozent der Basismasse gezählt.

Die Reaktivklebemasse enthält bevorzugt 50 % oder mehr, bevorzugt 70 % oder mehr, besonders bevorzugt 80 % oder mehr, ganz besonders bevorzugt 90 % oder mehr, insbesondere bevorzugt 95 % oder mehr, der Basismasse, bezogen auf die Gesamtmasse der Reaktivklebemasse.

Die Basismasse der Reaktivklebemasse des erfindungsgemäßen reaktiven Haftklebebands umfasst 35 Gew.-% bis 80 Gew.-% mindestens eines Poly(meth)acrylats (a), insbesondere umfasst die Basismasse der Reaktivklebemasse 40 Gew.-% bis 70 Gew.-% und bevorzugter 45 Gew.-% bis 65 Gew.-% mindestens eines Poly(meth)acrylats (a), jeweils bezogen auf das Gesamtgewicht der Basismasse der Reaktivklebemasse.

Die Gewichtsprozentangaben (Gew.-%) beziehen sich auf das mindestens eine Poly(meth)acrylat oder auf die Summe aller Poly(meth)acrylate, falls zwei oder mehr Poly(meth)acrylate vorliegen.

Die Klebemasse enthält zusätzlich zu 100 Gew.-% der Basismasse (c) 0,1 Gew.-% bis 5 Gew.-%, bezogen auf 100 Gew.-% der Basismasse, mindestens eines Initiators zur Aushärtung der Epoxidverbindung.

Das Poly(meth)acrylat bzw. die Poly(meth)acrylate der Basismasse der Reaktivklebmasse im erfindungsgemäßen reaktiven Haftklebeband ist bzw. sind auf eine Monomerzusammensetzung zurückzuführen, die
(i) 55 Gew.-% bis 100 Gew.-% eines oder mehrerer Monomere ausgewählt aus der Gruppe bestehend aus
   a. einem oder mehreren Monomeren der Formel (I) 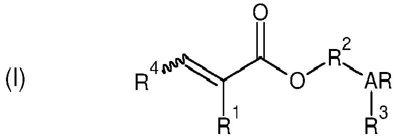
      worin R¹ für ein Wasserstoffatom oder eine Methylgruppe,
      R² für eine unsubstituierte, lineare oder verzweigte C₁-C₂₂-Alkylkette,
      AR für einen aromatischen Rest,
      R³ für H, eine unsubstituierte, lineare oder verzweigte C₁-C₅-Alkylkette, eine Hydroxygruppe, C₁-C₁₀-Alkoxygruppe oder Aryloxygruppe, und
      R⁴ für H oder einen Phenylring steht,
   b. einem oder mehreren Monomeren der Formel (II) 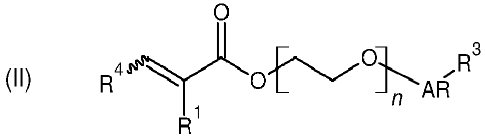
      worin R¹ für ein Wasserstoffatom oder eine Methylgruppe,
      AR für einen aromatischen Rest,
      R³ für H, eine unsubstituierte, lineare oder verzweigte C₁-C₅-Alkylkette, eine Hydroxygruppe, C₁-C₁₀-Alkoxygruppe oder Aryloxygruppe, und
      R⁴ für H oder einen Phenylring steht, und n = 0 bis 10 ist,
   c. Styrol, und
   d. Methylstyrol; und
(ii) 0 Gew.-% bis 45 Gew.-% eines oder mehrerer Comonomere, wobei das Comonomer oder die Comonomere ausgewählt sind aus der Gruppe der (Meth)acrylat-Monomere und copolymerisierbaren Vinylmonomeren, und wobei das Comonomer oder die Comonomere nicht den Monomeren der Formel (I), den Monomeren der Formel (II), Styrol und Methylstyrol entsprechen,
   umfasst oder daraus besteht, wobei die Gewichtsanteile jeweils auf das Gesamtgewicht der Monomerzusammensetzung bezogen sind.

Zur Herstellung der Poly(meth)acrylate können prinzipiell alle radikalischen oder radikalischkontrollierten Polymerisationen eingesetzt werden, ebenso Kombinationen verschiedener Polymerisationsverfahren. Neben der konventionellen, freien radikalischen Polymerisation sind dies z. B. auch die ATRP, die Nitroxid/TEMPO- kontrollierte Polymerisation oder der RAFT-Prozess. Die Poly(meth)acrylate können durch Copolymerisation der (Co)Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird. Die Polymerisation kann in Polymerisationsreaktoren durchgeführt werden, die im Allgemeinen mit einem Rührer, mehreren Zulaufgefäßen, Rückflusskühler, Heizung und Kühlung versehen sind und für das Arbeiten unter N₂-Atmosphäre und Überdruck ausgerüstet sind. Die radikalische Polymerisation wird in Gegenwart eines oder mehrerer organischer Lösungsmittel und/oder in Gegenwart von Wasser oder in Substanz durchgeführt. Es wird dabei angestrebt, die verwendete Lösungsmittelmenge so gering wie möglich zu halten. Die Polymerisationszeit beträgt in der Regel - je nach Umsatz und Temperatur - zwischen 6 und 48 Stunden.

Das mittels Gelpermeationschromatographie (GPC) bestimmte gewichtsmittlere Molekulargewicht M_{w} der Polymere beträgt in einer bevorzugten Ausführungsform mindestens 20.000 g/mol, bevorzugt zwischen 50.000 und 2.000.000 g/mol, insbesondere zwischen 100.000 und 2.000.000 g/mol, besonders bevorzugt zwischen 700.000 und 1.700.000 g/mol und am ganz besonders bevorzugt zwischen 1.000.000 und 1.700.000 g/mol.

Es ist auch denkbar Mischungen aus einem hochmolekularen (d.h. gewichtsmittleres Molekulargewicht M_{w} von >20.000 g/mol) Poly(meth)acrylat, ausschließlich aufgebaut aus einem oder mehreren Comonomeren (ii), und einem niedermolekularen (d.h. gewichtsmittleres Molekulargewicht M_{w} zwischen 3.000 und 20.000 g/mol) Poly(meth)acrylat, ausschließlich aufgebaut aus einem oder mehreren Monomeren (i), zu verwenden, wobei das Verhältnis von hochmolekularem Poly(meth)acrylat zu niedermolekularem Poly(meth)acrylat nicht kleiner als 0,5, bevorzugt nicht kleiner als 1, insbesondere nicht kleiner als 1,25 sein sollte, um gute Haftklebeeigenschaften im unausgehärteten Zustand zu erzielen.

Die Bestimmung durch Gelpermeationschromatographie (GPC) erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Å, 8,0 mm * 50 mm (Angaben hier und im Folgenden in der Reihenfolge: Typ, Partikelgröße, Porosität, Innendurchmesser * Länge; 1 Å = 10⁻¹⁰ m) verwendet. Zur Auftrennung wird eine Kombination der Säulen des Typs PSS-SDV, 5 µm, 10³ Ä sowie 10⁵ Å und 10⁶ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten gegen PMMA-Standards (Polymethylmethacrylat-Kalibrierung). Die Kalibrierung wird mittels des kommerziell verfügbaren ReadyCal-Kits Poly(styrene) high der Firma PSS Polymer Standard Service GmbH, Mainz, durchgeführt. Diese wird anhand der Mark-Houwink-Parameter K und alpha universell in Polymethylmethacrylat (PMMA) umgerechnet, so dass die Angabe der Daten in PMMA-Massenäquivalenten erfolgt. Bei anderen Molekülen ((Harze, Elastomere) erfolgt die Kalibrierung gegen PS-Standards (Polystyrol-Kalibrierung)

Zur Lösungsmittelpolymerisation werden als Lösemittel vorzugsweise Ester gesättigter Carbonsäuren (z.B. Ethylacetat), aliphatische Kohlenwasserstoffe (z.B. n-Hexan oder n-Heptan), Ketone (z.B. Aceton oder Methylethylketon), Siedegrenzbenzin oder Gemische dieser Lösungsmittel verwendet. Bevorzugt wird ein Lösungsmittelgemisch aus Aceton und Isopropanol eingesetzt, wobei der Isopropanolgehalt zwischen 1 und 10 Gewichtsprozent liegt.

Als Polymerisationsinitiatoren werden gewöhnlich übliche radikalbildende Verbindungen, wie beispielsweise Peroxide und Azoverbindungen, eingesetzt. Auch Initiatorgemische können verwendet werden. Bei der Polymerisation können auch Thiole als Regler zur Molekulargewichtssenkung und Verringerung der Polydispersität eingesetzt werden. Als weitere sogenannte Polymerisationsregler können zum Beispiel Alkohole und Ether verwendet werden.

In einer Ausführungsform werden die Poly(meth)acrylate über das sogenannte "Sirup-Verfahren" erhalten. Dazu wird in einem vorgelagerten Schritt die Monomerzusammensetzung zu einem Sirup vorpolymerisiert. Dieser Sirup wird dann in der Formulierung der Reaktivklebmasse eingesetzt und nach dem Beschichtungsschritt zum Beispiel mit Licht einer Wellenlänge, die den kationischen Initiator nicht aktiviert, ausreagieren gelassen. Über dieses Verfahren können die erfindungsgemäßen Klebebänder erhalten werden.

Der aromatische Rest der Gruppen AR ist bevorzugt ausgewählt aus der Gruppe bestehend aus Phenyl-Gruppen, Phenylen-Gruppen, Naphthyl-Gruppen und Naphthylen-Gruppen, die optional Substituenten tragen können. Besonders bevorzugt ist der aromatische Rest AR ausgewählt aus der Gruppe bestehend aus Phenyl-Gruppen, Phenylen-Gruppen, Naphthyl-Gruppen und Naphthylen-Gruppen, wobei Phenyl-Gruppen oder Phenylen-Gruppen ganz besonders bevorzugt sind.

Unter einer "Phenylen-Gruppe" wird in Übereinstimmung mit dem fachmännischen Verständnis eine Phenyl-Gruppe verstanden, die wenigstens zweifach gebunden ist.

Dies gilt analog für Naphthylen.

In einer bevorzugten Ausführungsform enthalten die Monomere (i) einen Phenylring, d.h. AR in Formel (I) steht für eine Phenyl-Gruppe oder eine Phenylen-Gruppe und R⁴ steht für Wasserstoff, daher sind sie ausgewählt aus der Gruppe bestehend aus
a. einem oder mehreren Monomeren der Formel (la) 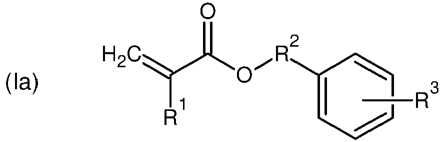
   worin R¹ für ein Wasserstoffatom oder eine Methylgruppe,
   R² für eine unsubstituierte, lineare oder verzweigte C₁-C₂₂-Alkylkette, und
   R³ für H, eine unsubstituierte, lineare oder verzweigte C₁-C₅-Alkylkette, eine Hydroxygruppe, C₁-C₁₀-Alkoxygruppe oder Aryloxygruppe steht, und
b. einem oder mehreren Monomeren der Formel (Ila) 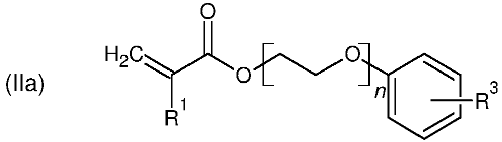
   worin R¹ für ein Wasserstoffatom oder eine Methylgruppe, und
   R³ für H, eine unsubstituierte, lineare oder verzweigte C₁-C₅-Alkylkette, eine Hydroxygruppe, C₁-C₁₀-Alkoxygruppe oder Aryloxygruppe steht, und n = 0 bis 10 ist.

Die Monomere (i) sind bevorzugt ausgewählt aus der Gruppe der (Meth)Acrylsäureester der Formel (la) und der (Meth)Acrylsäureester der Formel (IIa), wobei insbesondere bei den Monomeren der Formel (I) n = 1 bis 4 bevorzugt ist und wobei insbesondere bei den Monomeren der Formel (IIa) unsubstituierte C₁-C₈-Alkylkette für R², und H oder tert.-butyl für R³ bevorzugt sind. Insbesondere sind die Monomere (i) ausgewählt aus der Gruppe: Benzylacrylat, Phenylacrylat, 2-Phenylethylacrylat, 3-Phenylpropylacrylat, 4-Phenylbutylacrylat, 5-Phenylpentylacrylat, 6-Phenylhexylacrylat, Benzylmethylacrylat, Phenylmethacrylat, 2-Phenylethylmethacrylat, 3-Phenylpropylmethacrylat, 4-Phenylbutylmethacrylat, 5-Phenylpentylmethacrylat, 6-Phenylhexylmethacrylat, 2-Phenoxyethylacrylat, 2-Phenoxydiethyleneglycolacrylat, 2-Phenoxytriethyleneglycolacrylat, 2-Phenoxytetraethyleneglycolacrylat, 2-Phenoxypentaethyleneglycolacrylat, 2-phenoxyhexaethyleneglycolacrylat, 2-Phenoxyheptaethyleneglycolacrylat, 2-Phenoxyoctaethyleneglycolacrylat, 2-Phenoxynonaethyleneglycolacrylat, 2-Phenoxydecaethyleneglycolacrylat, 2-Phenoxyethylmethacrylat, 2-Phenoxydiethyleneglycolmethacrylat, 2-Phenoxytriethyleneglycolmethacrylat, 2-Phenoxytetraethyleneglycolmethacrylat, 2-Phenoxypentaethyleneglycolmethacrylat, 2-Phenoxyhexaethyleneglycolmethacrylat, 2-Phenoxyheptaethyleneglycolmethacrylat, 2-Phenoxyoctaethyleneglycolmethacrylat, 2-Phenoxynonaethyleneglycolmethacrylat, 2-Phenoxydecaethyleneglycolmethacrylat, 4-tert.-Butylphenylacrylat, 4-tert.-Butylphenylmethacrylat, 2-(4-tert.-Butyl)phenoxyethylacrylat, 2-(4-tert.-Butyl)phenoxydiethyleneglycolacrylat, 2-(4-tert.-Butyl)phenoxytriethyleneglycolacrylat, 2-(4-tert.-Butyl)phenoxytetraethyleneglycolacrylat, 2-(4-tert.-Butyl)phenoxypentaethyleneglycolacrylat, 2-(4-tert.-Butyl)phenoxyhexaethyleneglycolacrylat, 2-(4-tert.-Butyl)phenoxyheptaethyleneglycolacrylat, 2-(4-tert.-Butyl)phenoxyoctaethyleneglycolacrylat, 2-(4-tert.-Butyl)phenoxynonaethyleneglycolacrylat, 2-(4-tert.-Butyl)phenoxydecaethyleneglycolacrylat, 2-(4-tert.-Butyl)phenoxyethylmethacrylat, 2-(4-tert.-Butyl)phenoxydiethyleneglycolmethacrylat, 2-(4-tert.-Butyl)phenoxytriethyleneglycolmethacrylat, 2-(4-tert.-Butyl)phenoxytetraethyleneglycolmethacrylat, 2-(4-tert.-Butyl)phenoxypentaethyleneglycolmethacrylat, 2-(4-tert.-Butyl)phenoxyhexaethyleneglycolmethacrylat, 2-(4-tert.-Butyl)phenoxyheptaethyleneglycolmethacrylat, 2-(4-tert.-Butyl)phenoxyoctaethyleneglycolmethacrylat, 2-(4-tert.-Butyl)phenoxynonaethyleneglycolmethacrylat, 2-(4-tert.-Butyl)phenoxydecaethyleneglycolmethacrylat.

Besonders bevorzugt sind die Monomere (i) ausgewählt aus der Gruppe bestehend aus Benzylacrylat, Phenylacrylat, Benzylmethacrylat, Phenylmethacrylat, 2-Phenoxyethylacrylat, 2-Phenoxyethylmethacrylat. Äußerst bevorzugt sind die Monomere (i) ausgewählt aus Benzylacrylat und Benzylmethacrylat.

Grundsätzlich sind die Comonomere (ii) ausgewählt aus allen dem Fachmann bekannten (Meth)acrylat-Monomeren und anderen radikalisch copolymerisierbaren Vinylmonomeren, wie z.B. Acrylonitril oder N-Vinylcaprolactam, die copolymerisierbar sind mit den Monomeren (i), wobei die Comonomere (ii) nicht den Monomeren (i), also den Monomeren der Formeln (I) oder (la), der Formeln (II) oder (IIa), Styrol und Methylstyrol entsprechen.

Beispiele für solche Comonomere (ii) sind Acrylsäure, Carboxyethylacrylate, Caprolactonacrylat, 1,4-Cyclohexanedimethanolmonoacrylat, 2,3-Dihydroxypropylmethacrylat, 4-Hydroxybutylacrylat, 2-Hydroxyethylacrylat, 2-Hydroxyethylmethacrylat, Hydroxypropylacrylat, n-Butylacrylat, n-Butylmethacrylat, Behenylacrylat, Behenylmethacrylat, Cetylacrylat, Ethylacrylat, Ethylmethacrylat, 2-Ethyhexylacrylat, 2-Ethyhexylmethacrylat, 2-Ethylhexyldiglycolacrylat, n-Hexylacrylat, Isobutylacrylat, Iso-Butylmethacrylat, Icosylacrylat, Isoheptadecylacrylat, Isoheptadecylmethacrylat, Isostearylacrylat, Isodecylacrylat, Isodecylmethacrylat, Isononylacrylat, Isooctylacrylat, Laurylacrylat, Laurylmethacrylat, Tetradecylacrylat, Methylacrylat, Methylmethacrylat, Methoxyethylacrylat, n-Octylacrylat, 2-Octylacrylat, n-Decylacrylat, Propylheptylacrylat, Stearylacrylat, Stearylmethacrylat, tert.-Butylacrylat, tert.-Butylmethacrylat, Cyclohexylacrylat, Cyclohexylmethacrylat, (5-Ethyl-1,3-dioxan-5-yl)methylacrylat, Dihydrodicyclopentadienylacrylat, Isobornylacrylat, Isobornylmethacrylat, Norbornylacrylat, 4-tert-Butylcyclohexylacrylat, Tetrahydrofurfurylacrylat, 3,3,5-Trimethylcyclohexylacrylat, tert.-Butylcyclohexylmethacrylat, Ethylendiglycolacrylat, Kalium-3-sulphonatopropylacrylat, 2-(O-[1'-Methylpropylideneamino]carboxyamino)ethylmethacrylat, 2-[(3,5-dimethylpyrazolyl)carboxyamino]ethylmethacrylat, Polypropylenglycolmomomethacrylat, Ureidomethacrylat, Methacrylamid, 4-Acryloylmorpholin, Acrylnitril, N,N-Dimethylacrylamid, N-tert.-Butyl acrylamid, N-Methylolmethacrylamid, N-Vinylcaprolactam, N-Vinylpyrrolidon, Vinylmethyloxazolidinon, Maleinsäureanhydrid und Vinylacetat.

Bevorzugt ist der T_{g} eines Homopolymers des jeweiligen Comonomers (ii) größer als 0 °C, bevorzugt größer als 10°C, insbesondere größer als 20 °C und besonders bevorzugt größer als 30 °C. Insbesondere umfasst die Gruppe der Comonomere (ii) keine Monomere, die mehr als eine radikalisch polymerisierbare Gruppe enthalten, da dies zu einer Vernetzung führt. Daher ist ein nicht vernetztes Poly(meth)acrylat besonders bevorzugt im Sinne dieser Erfindung.

Geeignete bevorzugte Comonomere (ii) sind ausgewählt aus der Gruppe bestehend aus Acrylsäure, 1,4-Cyclohexanedimethanolmonoacrylat, 2,3-Dihydroxypropylmethacrylat, 2-Hydroxyethylmethacrylat, n-Butylmethacrylat, Behenylacrylat, Behenylmethacrylat, Cetylacrylat, Ethylmethacrylat, 2-Ethyhexylmethacrylat, 2-Ethylhexyldiglycolacrylat, n-Hexylacrylat, Isobutylacrylat, iso-Butylmethacrylat, Icosylacrylat, Isononylacrylat, Tetradecylacrylat, Methylacrylat, Methylmethacrylat, Stearylacrylat, tert.-Butylacrylat, tert.-Butylmethacrylat, Cyclohexylacrylat, Cyclohexylmethacrylat, (5-Ethyl-1,3-dioxan-5-yl)methylacrylat, Dihydrodicyclopentadienylacrylat, Isobornylacrylat, Isobornylmethacrylat, Norbornylacrylat, 4-tert-Butylcyclohexylacrylat, 3,3,5-Trimethylcyclohexylacrylat, Tert.-Butylcyclohexylmethacrylat, Kalium-3-sulphonatopropylacrylat, 2-(O-[1'-Methylpropylideneamino]carboxyamino)ethylmethacrylat, 2-[(3,5-Dimethylpyrazolyl)carboxyamino]ethylmethacrylat, Ureidomethacrylat, Methacrylamid, 4-Acryloylmorpholin, Acrylnitril, N,N-Dimethylacrylamid, N-tert.-Butylacrylamid, N-Methylolmethacrylamid, N-Vinylcaprolactam, N-Vinylpyrrolidon, Vinylmethyloxazolidinon, Maleinsäureanhydrid und Vinylacetat.

Besonders als Comonomer (ii) geeignet sind (Meth)Acrylsäureester, die ausgewählt sind aus der Gruppe bestehend aus (Meth)Acrylsäureestern, welche cyclische Kohlenstoffseitengruppen aufweisen, (Meth)Acrylsäureestern, deren Kohlenstoffseitengruppen linear oder verzweigt sind und mehr als 10 Kohlenstoffatome aufweisen, und (Meth)Acrylsäureester deren T_{g} eines Homopolymers größer als 0 °C sind.

Besonders bevorzugt sind die Comonomere (ii) ausgewählt aus der Gruppe bestehend aus: Acrylsäure, Stearylacrylat, Methylacrylat, tert.-Butylacrylat, Cyclohexylacrylat, Dihydrodicyclopentadienylacrylat, Isobornylacrylat, 1,4-Cyclohexanedimethanolmonoacrylat, Methylmethacrylat, 2-Hydroxyethylmethacrylat, tert.-Butylcyclohexylmethacrylat, Behenylmethacrylat, n-Butylmethacrylat, Cyclohexylmethacrylat, Ethylmethacrylat, Iso-Butylmethacrylat, tert.-Butylmethacrylat, Isobornylmethacrylat, tert.-Butylcyclohexylmethacrylat, 3,4-Epoxycyclohexylmethylmethacrylat, Glycidylmethacrylat. Besonders bevorzugt sind Methylmethacrylat, Isobornylacrylat, Methylacrylat, Stearylacrylat.

Die Erfinder haben überraschenderweise festgestellt, dass Comonomere (ii) ausgewählt aus der Gruppe der (Meth)Acrylsäureester, deren Kohlenstoffseitengruppen linear oder verzweigt sind und mehr als 10 Kohlenstoffatome aufweisen, einen Gewichtsanteil von bis zu 30 Gew.-%, bevorzugt bis zu 25 Gew.-%, insbesondere bis zu 20 Gew.-% am Gesamtgewicht der Monomerzusammensetzung ausmachen können und keinen negativen Einfluss auf die chemische Beständigkeit der erfindungsgemäßen Reaktivklebemasse haben.

Bevorzugt handelt es sich hierbei um Comonomere (ii) ausgewählt aus der Gruppe bestehend aus Laurylacrylat, Laurylmethacrylat, Tetradecylacrylat, Stearylmethacrylat, Cetylacrylat, Tetradecylacrylat und Stearylacrylat; insbesondere bevorzugt ausgewählt aus der Gruppe bestehend aus Cetylacrylat, Tetradecylacrylat und Stearylacrylat.

Außerdem wurde beobachtet, dass Comonomere (ii) ausgewählt aus der Gruppe der (Meth)Acrylsäureester, welche cyclische Kohlenstoffseitengruppen aufweisen ebenfalls einen Gewichtsanteil von bis zu 30 Gew.-%, bevorzugt 25 Gew.-%, insbesondere bis zu 20 Gew.-%, am Gesamtgewicht der Monomerzusammensetzung ausmachen können. Ohne eine an eine bestimmte Theorie gebunden zu sein, glauben die Erfinder, dass solche Gruppen aufgrund der Mischung aus der eher polarer Estergruppe und den eher unpolaren cyclischen Teilen die chemische Beständigkeit weder in die eine (polare Lösungsmittel) noch die andere (unpolare Lösungsmittel) Richtung beeinflussen.

Beispiele für solche Comonomere (ii) sind ausgewählt aus der Gruppe bestehend aus Cyclohexylacrylat, Cyclohexylmethacrylat, (5-Ethyl-1,3-dioxan-5-yl)methylacrylat, Dihydrodicyclopentadienylacrylat, Isobornylacrylat, Isobornylmethacrylat, Norbornylacrylat, 4-tert-butylcyclohexylacrylat, 3,3,5-Trimethylcyclohexylacrylat, tert.-Butylcyclohexylmethacrylat, 4-Acryloylmorpholin, N-Vinylcaprolactam, N-Vinylpyrrolidon, Vinylmethyloxazolidinon und Maleinsäureanhydrid. Besonders bevorzugt sind die Comonomere (ii) ausgewählt aus der Gruppe bestehend aus Cyclohexylacrylat, Cyclohexylmethacrylat, (5-Ethyl-1,3-dioxan-5-yl)methyl acrylat, Dihydrodicyclopentadienylacrylat, Isobornylacrylat, Isobornylmethacrylat, Norbornylacrylat, 4-tert-butylcyclohexylacrylat, 3,3,5-Trimethylcyclohexylacrylat, tert.-Butylcyclohexylmethacrylat.

Die Monomerzusammensetzung auf die das Poly(meth)acrylat bzw. die Poly(meth)acrylate der Reaktivklebmasse im erfindungsgemäßen reaktiven Haftklebeband zurückzuführen ist, besteht üblicherweise aus bis zu 15 verschiedenen Monomeren. Bevorzugt besteht die Monomerzusammensetzung aus bis 5 verschiedenen Monomeren, bevorzugter aus 4 verschiedenen Monomeren, stärker bevorzugt aus 3 verschiedenen Monomeren, noch bevorzugter aus 2 verschiedenen Monomeren und am bevorzugten aus einem Monomer und damit nur aus einem Monomer (i). Im Falle von insgesamt zwei Monomeren gehören bevorzugt beide Monomere der Gruppe der Monomere (i) an und im Falle von insgesamt drei Monomeren gehören entweder zwei oder alle drei der Monomere der Gruppe der Monomere (i) an. Besonders bevorzugt ist es, dass die Monomerzusammensetzung aus einem Monomer (i) besteht, welches bevorzugt aus Benzylacrylat und Benzylmethylacrylat ausgewählt ist, oder dass die Monomerzusammensetzung aus zwei Monomeren (i) besteht, welche aus der Gruppe bestehend aus Benzylacrylat, Phenylacrylat, Benzylmethacrylat, Phenylmethacrylat, 2-Phenoxyethylacrylat, 2-Phenoxyethylmethacrylat ausgewählt sind, und bevorzugt aus der Gruppe bestehend aus Phenoxyethylacrylat, 2-Phenoxyethylmethacrylat, Benzylacrylat und Benzylmethacrylat ausgewählt sind. Bevorzugte Kombination sind hierbei 2-Phenoxyethylacrylat und 2-Phenoxyethylmethacrylat oder Benzylacrylat und Benzylmethacrylat oder 2-Phenoxyethylacrylat und Benzylmethacrylat.

Das Poly(meth)acrylat bzw. die Poly(meth)acrylate der Reaktivklebmasse im erfindungsgemäßen reaktiven Haftklebeband ist auf eine Monomerzusammensetzung zurückzuführen, die 55 Gew.-% bis 100 Gew.-% eines oder mehrerer Monomere (i) und 0 Gew.-% bis 45 Gew.-% eines oder mehrere Comonomere (ii) umfasst oder daraus besteht. Insbesondere enthält die Monomerzusammensetzung 60 Gew.-% bis 100 Gew.-%, 65 Gew.-% bis 100 Gew.-%, 70 Gew.-% bis 100 Gew.-%, 75 Gew.-% bis 100 Gew.-%, 80 Gew.-% bis 100 Gew.-% oder 90 Gew.-% bis 100 Gew.-% von einem oder mehreren Monomeren (i). Entsprechende Mengen eines oder mehrere Comonomere (ii) sind enthalten, so dass bevorzugt insgesamt 100 Gew.-% erreicht werden. Bevorzugt sind 70 Gew.-% bis 100 Gew.-%, stärker bevorzugt 80 Gew.-% bis 100 Gew.-%, noch stärker bevorzugt 90 Gew.-% bis 100 Gew.-% und ganz besonders bevorzugt 100 Gew.-% von einem oder mehreren Monomeren (i).

In einer bevorzugten Ausführungsform ist das Poly(meth)acrylat bzw. die Poly(meth)acrylate der Reaktivklebmasse im erfindungsgemäßen reaktiven Haftklebeband gegenüber der mindestens einen Epoxidverbindung und dem mindestens einen Initiator sowie den gegebenenfalls übrigen Stoffen im Wesentlichen inert. Inert bedeutet in diesem Zusammenhang, dass die mindestens eine Epoxidverbindung und die ggf. übrigen Stoffe vor der Lichthärtung unter geeignet gewählten Bedingungen, insbesondere bei Raumtemperatur (23 °C), im Wesentlichen nicht mit dem Poly(meth)acrylat bzw. den Poly(meth)acrylaten reagieren. Aus diesem Grund ist in einer bevorzugten Ausführungsform keine Acrylsäure oder andere Monomere mit einer oder mehreren Carboxylgruppen als Comonomer (ii) in der Monomerzusammensetzung des Poly(meth)acrylats enthalten. In einer speziellen Ausführungsform ist das Poly(meth)acrylat bzw. die Poly(meth)acrylate zusätzlich auch nach der Aktivierung der Härtungsreaktion inert. Dies bedeutet, dass in dieser speziellen bevorzugten Ausführungsform auch keine Monomere, die zur kationischen Copolymerisation mit Epoxiden fähig sind als Comonomere (ii) verwendet werden. Demnach werden die bekannten Monomere 3,4-Epoxycyclohexylmethylmethacrylat, Glycidylmethacrylat, 2-Isocyanatoethylacrylat, 2-Isocyanatoethylmethacrylat, Isopropenyldimethylbenzylisocyanat, Itaconicanhydrid, 4-Hydroxybutylacrylatglycidylether und 2-oxo-1,3-dioxolan-4-yl)methylacrylat, oder ähnliche reaktive Monomere nicht als Comonomere (ii) in der Monomerzusammensetzung des Poly(meth)acrylats verwendet, so dass das oder die Poly(meth)acrylat(e) keine Hydroxygruppen, Oxirangruppen, wie zum Beispiel Epoxid oder Oxetan und auch keine cyclischen Ethergruppen enthalten.

Die Aushärtung der Reaktivklebemasse des erfindungsgemäßen reaktiven Haftklebebands erfolgt über eine kationische Polymerisation bzw. über einen kationischen Reaktionsmechanismus, weshalb in einer bevorzugten Ausführungsform die Comonomere (ii) des Poly(meth)acrylats keine aminischen Gruppen enthalten, wie z.B. 2-(Dimethylamino)ethylacrylat, Acrylamid, Methacrylamid, 4-Acrylomorpholin, N,N-Dimethylacrylamid, N-Methylolmethacrylamid, N-Vinylcaprolactam, N-Vinylpyrrolidon.

Die Basismasse der Reaktivklebemasse des erfindungsgemäßen reaktiven Haftklebebands umfasst 20 Gew.-% bis 65 Gew.-% mindestens einer Epoxidverbindung (b) und insbesondere umfasst die Basismasse 30 Gew.-% bis 60 Gew.-% und bevorzugter 35 Gew.-% bis 55 Gew.-% mindestens einer Epoxidverbindung (b), jeweils bezogen auf das Gesamtgewicht der Bestandteile der Basismasse der Reaktivklebemasse.

Die genannten Gewichtsprozentangaben beziehen sich auf die eine Epoxidverbindung oder auf die Summe aller Epoxidverbindungen, falls zwei oder mehr Epoxidverbindungen vorliegen.

Bevorzugt beträgt in der Reaktivklebemasse des erfindungsgemäßen reaktiven Haftklebebands das Gewichtsverhältnis der Gesamtheit der Poly(meth)acrylate zur Gesamtheit der Epoxidverbindungen 3:1 bis 1:3, stärker bevorzugt 2:1 bis 1:2, insbesondere 1,5:1 bis 1:1,5.

Die Basismasse der Reaktivklebemasse des erfindungsgemäßen reaktiven Haftklebebands umfasst mindestens eine Epoxidverbindung (b). In Übereinstimmung mit dem fachmännischen Verständnis sind Epoxidverbindungen solche Verbindungen, die zumindest eine OxiranGruppe tragen. Sie können aromatischer oder aliphatischer, insbesondere cycloaliphatischer, Natur sein. Epoxidverbindungen können sowohl monomere als auch oligomere beziehungsweise polymere Epoxidverbindungen umfassen. Epoxidverbindungen weisen häufig im Durchschnitt wenigstens zwei Epoxidgruppen pro Molekül, vorzugsweise mehr als zwei Epoxidgruppen pro Molekül, auf. Die "durchschnittliche" Anzahl an Epoxidgruppen pro Molekül wird als die Anzahl an Epoxidgruppen in dem epoxidhaltigen Material dividiert durch die Gesamtanzahl an vorliegenden Epoxidmolekülen definiert.

Die oligomeren beziehungsweise polymeren Epoxidverbindungen umfassen zumeist lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder -copolymer). Durch Reaktion von Epoxidharzen mit CTBN werden sogenannte epoxy-terminierte- Nitrilkautschuke (ETBN) erhalten. Kommerziell sind solche ETBN beispielsweise von der Firma Huntsman International unter dem Namen HYPRO ETBN - wie beispielsweise Hypro 1300X40 ETBN, Hypro 1300X63 ETBN und Hypro 1300X68 ETBN - erhältlich.

Das Molekulargewicht der mindestens einen Epoxidverbindung oder der Epoxidverbindungen, die in der erfindungsgemäßen lichthärtenden Klebemasse enthalten sind, kann von 58 bis etwa 100.000 g/mol variieren, wobei das Molekulargewicht eine wichtige Stellgröße für die Einstellung der dynamischen Viskosität ist. Beispielhafte Epoxidverbindungen umfassen Epoxycyclohexancarboxylate, wie beispielsweise 4-Epoxycyclohexylmethyl-3,4-epoxycyclo-hexancarboxylat, 3,4-Epoxy-2-methylcyclohexylmethyl-3,4-epoxy-2-methylcyclohexan-carboxylat und Bis(3,4-epoxy-6-methylcyclohexylmethyl)adipat. Weitere Beispiele für Epoxidverbindungen sind beispielsweise in der US 3,117,099 A offenbart. Weitere geeignete Epoxidverbindungen, die bei der Anwendung dieser Erfindung besonders nützlich sind, umfassen Glycidylethermonomere, wie sie beispielsweise in der US 3,018,262 A offenbart sind. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Insbesondere Diglycidylether von Bisphenolen, wie z.B. Bisphenol-A (4,4'-(Propan-2,2-diyl)diphenol) und Bisphenol-F (Bis(4-hydroxyphenyl)methan), und hydrierte Varianten davon. Solche Reaktionsprodukte sind kommerziell in unterschiedlichen Molekulargewichten und Aggregatzuständen erhältlich (beispielsweise sogenannte Typ 1 bis Typ 10 BADGE-Harze). Typische Beispiele für flüssige Bisphenol-A-Diglycidylether sind Epikote 828, D.E.R.331 und Epon 828, und Beispiele für flüssige hydrierte Bisphenol-A-Diglycidylether ist Eponex 1510. Typische feste BADGE-Harze sind Araldite GT6071, GT7072, Epon 1001 und D.E.R. 662. Weitere Umsetzungsprodukte von Phenolen mit Epichlorhydrin sind die Phenol- und Cresolnovolakharze wie z.B. die Epiclon Typen oder Araldite EPN und ECN Typen (z.B. ECN1273). Weitere geeignete Epoxidverbindungen sind Epoxidharze die aus nachwachsenden Rohstoffen erhalten werden, wie aus Ölen, wie zum Beispiel epoxidiertes Leinöl, epoxidiertes Sojabohnenöl, oder aus den Schalen der Cashewnuss, wie zum Beispiel epoxidierte Cardanole, oder Epoxidharze, die Glycerin enthalten, wie zum Beispiel Bisphenol-A welches mit Epichlorhydrin umgesetzt wird, was aus Glycerin gewonnen wurde.

Die Umwandlung der Epoxidverbindungen während der Härtungsreaktion der Reaktivklebemasse erfolgt insbesondere durch kationische Polymerisation über die EpoxidGruppen. Mit Epoxidverbindungen lassen sich Klebstoffe von besonders hoher Scherfestigkeit herstellen. Außerdem sind die Vernetzungsreaktionen gut initiier- und handhabbar. In ungehärtetem Zustand sind die unter Verwendung von Epoxidverbindungen hergestellten Reaktivklebemassen ausreichend lagerstabil.

Bevorzugt ist entsprechend ein erfindungsgemäßes reaktives Haftklebeband, wobei die mindestens eine Epoxidverbindung in der Reaktivklebemasse ausgewählt ist aus der Gruppe bestehend aus cycloaliphatischen Epoxidharzen, wie 3,4-Epoxycyclohexylmethyl-3',4'-epoxycyclohexan-carboxylat, Bisphenol-A-Diglycidylether (BADGE) Harzen, hydrierten Bisphenol-A-Diglycidylether (BADGE) Harzen, epoxy-terminierten Nitrilkautschuken (ETBN) und epoxy-terminierten Butadienkautschuken (EBN), besonders bevorzugt sind Bisphenol-A-Diglycidylether und hydrierte Bisphenol-A-Diglycidylether.

Die Erfinder haben überraschenderweise festgestellt, dass hydrierte Diglycidylether von Bisphenolen, wie z.B. Bisphenol-A-Diglycidylether, besonders geeignet sind, da sie einen positiven Effekt auf die chemische Beständigkeit bei Verklebungen auf Aluminium zeigen. Daher umfasst die Reaktivklebmasse in einer bevorzugten Ausführungsform 10 Gew.-% bis 70 Gew.-% eines oder mehrerer hydrierter Diglycidylether von Bisphenolen, wie z.B. Bisphenol-A-Diglycidylether, bevorzugt 15 Gew.-% bis 40 Gew.-% eines oder mehrerer hydrierter Diglycidylether von Bisphenolen. Insbesondere Mischungen aus Bisphenol-A-Diglycidylethern mit hydrierten Bisphenol-A-Diglycidylethern zeigen ausgewogene chemische Beständigkeiten auf den Testsubstraten PC und AI.

Weiterhin bevorzugt ist ein erfindungsgemäßes reaktiven Haftklebeband, wobei die Reaktivklebemasse zwei oder mehr Epoxidverbindungen, insbesondere Epoxid-Harze, umfasst, wobei mindestens eine der Epoxidverbindungen ein Feststoff; insbesondere ein Feststoff mit einer Erweichungstemperatur von mindestens 45 °C, oder ein hochviskoser Stoff, bevorzugt mit einer dynamischen Viskosität bei 25 °C von 50 Pa s oder mehr, besonders bevorzugt 100 Pa s oder mehr, insbesondere bevorzugt 150 Pa s oder mehr (gemessen nach DIN 53019-1 aus 2008; 25 °C, Schergeschwindigkeit 1 s-1), ist.

Besonders bevorzugt ist ein erfindungsgemäßes reaktives Haftklebeband, wobei die Reaktivklebemasse zwei oder mehr Epoxidverbindungen, insbesondere Epoxid-Harze, umfasst, wobei zumindest eine Epoxidverbindung (b1) bei 25 °C eine Flüssigkeit mit einer dynamischen Viskosität von 40 Pa s oder weniger, bevorzugt 20 Pa s oder weniger, und zumindest eine Epoxidverbindung (b2) bei 25 °C ein Feststoff oder ein hochviskoser Stoff mit einer dynamischen Viskosität von 50 Pa s oder mehr ist. Reaktivklebemassen mit flüssigen und festen beziehungsweise hochviskosen Epoxidverbindungen zeigen im unausgehärteten Zustand besonders ausgewogene Klebeigenschaften.

In einer bevorzugten Ausführungsform beträgt in der Reaktivklebemasse das Gewichtsverhältnis der Gesamtheit der flüssigen Epoxidverbindungen (b1), deren dynamische Viskosität bei 25 °C 40 Pa s oder weniger beträgt, zur Gesamtheit der festen Epoxidverbindungen (b2) (Feststoff mit einer Erweichungstemperatur von mindestens 45 °C oder ein hochviskoser Stoff mit einer dynamischen Viskosität bei 25 °C von 50 Pa s oder mehr) 1 : 2 bis 5 : 1 und stärker bevorzugt 1,5 : 1 bis 3 : 1.

In einer bevorzugten Ausführungsform umfasst die mindestens eine Reaktivklebemasse des erfindungsgemäßen reaktiven Haftklebeband
als Basismasse
35 Gew.-% bis 80 Gew.-% mindestens eines Poly(meth)acrylats (a);
5 Gew.-% bis 45 Gew.-% mindestens einer flüssigen Epoxidverbindung (b1), insbesondere 20 Gew.-% bis 40 Gew.-%;
5 Gew.-% bis 30 Gew.-% mindestens einer festen Epoxidverbindung (b2), insbesondere 15 Gew.-% bis 25 Gew.-%,
wobei die Gesamtmenge aller enthaltenen Poly(meth)acrylate und Epoxidverbindungen 100 Gew.-% ergibt; und
zudem
0,1 Gew.-% bis 5 Gew.-%, bezogen auf 100 Gew.-% der Basismasse, mindestens eines Initiators (c) zur Aushärtung der Epoxidverbindung beziehungsweise der Epoxidverbindungen.

Überraschend wurde festgestellt, dass reaktive Haftklebstoffe, die das in lichthärtenden Epoxidklebstoffen sehr häufig verwendete 3,4-Epoxycyclohexylmethyl-3',4'-epoxycyclohexan-carboxylat enthalten, eine in den meisten Fällen niedrigere chemische Beständigkeit zeigen. Aus diesem Grund enthält die Reaktivklebemasse des erfindungsgemäßen reaktiven Haftklebebands als flüssige Epoxidverbindung bevorzugt Bisphenol-A-Diglycidylether oder hydrierte Bisphenol-A-Diglycidylether oder Mischungen daraus.

In einer bevorzugten Ausführungsform beträgt in der Reaktivklebemasse das Gewichtsverhältnis der Gesamtheit der flüssigen Epoxidverbindungen (b1), deren dynamische Viskosität bei 25 °C 40 Pa s oder weniger beträgt, zur Gesamtheit der festen Epoxidverbindungen (b2) (Feststoff mit einer Erweichungstemperatur von mindestens 45 °C oder ein hochviskoser Stoff mit einer dynamischen Viskosität bei 25 °C von 50 Pa s oder mehr) 1 : 2 bis 5 : 1 und stärker bevorzugt 1,5 : 1 bis 3 : 1, wobei die flüssigen Epoxidverbindungen (b1) mindestens eine oder mehrere flüssige hydrierte Bisphenol-A-Diglycidylether umfassen.

Die Reaktivklebemasse des erfindungsgemäßen reaktiven Haftklebebands umfasst 0,1 Gew.-% bis 5 Gew.-% mindestens eines Initiators (c) zur Aushärtung der Epoxidverbindung, insbesondere umfasst die Reaktivklebemasse 0,1 Gew.-% bis 3 Gew.-% und bevorzugter 0,1 Gew.-% bis 2 Gew.-% mindestens eines Initiators (c), jeweils bezogen auf 100 Gew.-% Basismasse.

Beim vorliegend vorgesehenen Einsatz von mindestens einer Epoxidverbindungen in der Reaktivklebemasse erfolgt die Polymerisation bevorzugt mittels kationischer Polymerisation und daher umfasst die Reaktivklebemasse einen Initiator für die kationische Polymerisation. Bevorzugt sind der eine oder die mehreren Initiatoren ausgewählt aus der Gruppe bestehend aus strahlungsaktivierten Initiatoren und thermisch aktivierten Initiatoren.

Im Sinne der vorliegenden Erfindung einsetzbare thermisch aktivierten Initiatoren für eine kationische Härtung von Epoxiden sind insbesondere Pyridinium-, Ammonium (insbesondere Anilinium-) und Sulfonium-(insbesondere Thiolanium-)-Salze sowie Lanthanoidtriflate. Sehr vorteilhaft sind N-Benzylpyridinium-Salze und Benzylpyridinium-Salze, wobei Aromaten z.B. mit Alkyl- Alkoxy-, Halogen- oder Cyano-Gruppen substituiert sein können. J. Polym. Sci. A, 1995, 33, 505ff, US 2014/0367670 A1, US 5,242,715 A, J. Polym. Sci. B, 2001, 39, 2397ff, EP 393893 A1, Macromolecules, 1990, 23, 431ff, Macromolecules, 1991, 24,2689, Macromol. Chem. Phys., 2001, 202, 2554ff, WO 2013/156509 A2 und JP 2014/062057 A1 nennen entsprechende Verbindungen, die einsetzbar sind. Von den kommerziell erhältlichen Initiatorsystemen seien als Beispiele für sehr vorteilhaft einsetzbare Verbindungen San-Aid SI 80 L, San-Aid SI 100 L, San-Aid SI 110 L der Firma Sanshin, Opton CP-66 und Opton CP-77 der Firma Adeka und K-Pure TAG 2678, K-Pure CXC 1612 und K-Pure CXC 1614 der Firma King Industries genannt. Sehr vorteilhaft einsetzbar sind zudem Lanthanoidtriflate (Samarium-III-Triflat, Ytterbium-III-Triflat, Erbium-III-Triflat, Dysprosium-III-Triflat) sind bei Sigma Aldrich und Alfa Aesar (Lanthan-III-Triflat) erhältlich. Zu geeigneten Anionen für die einsetzbaren Initiatoren zählen Hexafluoroantimonat, Hexafluorophosphat, Hexafluoroarsenat, Tetrafluoroborat und Tetra(pentafluorophenyl)borat.

Mit Blick auf die späteren Handhabungseigenschaften ist es nach Einschätzung der Erfinder besonders vorteilhaft, strahlungsvernetzende vernetzende Systeme einzusetzen, da die Strahlungsaktivierung große handhabungstechnische Vorteile liefert. Daher ist in einer bevorzugten Ausführungsform der mindestens eine Initiator in der Reaktivklebmasse des erfindungsgemäßen reaktiven Haftklebebands ein strahlungsaktivierter Initiator, auch Photoinitiator genannt, für die kationische Polymerisation und die Reaktivklebemasse des erfindungsgemäßen Haftklebebandes umfasst bevorzugt 0,1 Gew.-% bis 5 Gew.-%, bevorzugter 0,1 Gew.-% bis 3 Gew.-% und am bevorzugten 0,1 Gew.-% bis 2 Gew.-% mindestens eines Photoinitiators (c) zur Aushärtung der mindestens einen Epoxidverbindung, jeweils bezogen auf 100 Gew.-% Basismasse.

Unter einem Photoinitiator wird eine Verbindung verstanden, die unter dem Einfluss energiereicher Strahlung eine chemische Reaktion initiieren kann. Der Photoinitiator ist bevorzugt ein UV-Initiator. UV-Initiatoren sind dem Fachmann grundsätzlich bekannt. Als Photoinitiatoren für eine kationische UV induzierte Härtung von Epoxidverbindungen sind insbesondere Sulfonium, lodonium und Metallocen basierende Systeme einsetzbar.

Anionen, die die Gegenionen für Sulfonium-, lodonium- und Metallocen-basierte Photoinitiatoren bilden, sind bevorzugt ausgewählt aus der Gruppe bestehend aus Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bis-(trifluoromethylsulfonyl)-amide und Tris-(trifluoromethylsulfonyl)-methide. Ferner sind insbesondere für lodonium-basierende Initiatoren auch Chlorid, Bromid oder lodid als Anionen denkbar, wobei aber Initiatoren, die im Wesentlichen frei von Chlor und Brom sind, bevorzugt werden.

Für Beispiele für Sulfonium basierende Kationen sei auf die Ausführungen in US 6,908,722 B1 verwiesen. Ein leistungsfähiges Beispiel für ein solches System ist beispielsweise Triphenylsulfoniumhexafluoroantimonat. Weitere geeignete Initiatoren sind beispielsweise in der US 3,729,313 A, US 3,741,769 A, US 4,250,053 A, US 4,394,403 A, US 4,231,951 A, US 4,256,828 A, US 4,058,401 A, US 4,138,255 A und US 2010/063221 A1 offenbart.

Konkrete Beispiele für einsetzbare Sulfonium-Salze sind Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat, Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat, 4-Butoxyphenyldiphenylsulfoniumtetrafluoroborat, 4-Chlorophenyl diphenylsulfoniumhexafluoroantimonat, Tris-(4-phenoxyphenyl)-sulfoniumhexafluorophosphat, Di-(4-ethoxyphenyl)-methylsulfoniumhexafluoroarsenat, 4- Acetylphenyldiphenylsulfoniumtetrafluoroborat, 4-Acetylphenyldiphenylsulfoniumtetrakis-(pentafluorobenzyl)-borat, Tris-(4-thiomethoxyphenyl)-sulfoniumhexa-fluorophosphat, Di-(methoxysulfonylphenyl)-methylsulfoniumhexafluoroantimonat, Di-(methoxynaphthyl)-methylsulfoniumtetrafluoroborat, Di-(methoxynaphthyl)-methylsulfonium-tetrakis-(penta-fluorobenzyl)-borat, Di-(carbomethoxyphenyl)-methylsulfoniumhexafluoro-phosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecylphenyl)-sulfoniumtetrakis-(3,5-bis-trifluoromethylphenyl)-borat, 4-Acetamidphenyldiphenylsulfoniumtetrafluoroborat, 4-Acetamidphenyldiphenylsulfoniumtetrakis-(pentafluoro-benzyl)-borat, Dimethylnaphthylsulfoniumhexafluorophosphat, Trifluoromethyldiphenylsulfoniumtetrafluoroborat, Trifluoromethyldiphenylsulfoniumtetrakis-(pentafluorobenzyl)-borat, Phenylmethylbenzylsulfoniumhexafluorophosphat, 5-Methylthianthreniumhexa-fluorophosphat, 10-Phenyl-9,9-dimethylthioxantheniumhexafluorophosphat, 10-Phenyl-9-oxothioxantheniumtetrafluoroborat, 10-Phenyl-9-oxothioxantheniumtetrakis-(pentafluoro-benzyl)-borat, 5-Methyl-10-oxothianthreniumtetrafluoroborat, 5-Methyl-10-oxothianthrenium tetrakis-(pentafluorobenzyl)-borat und 5-Methyl-10,10-dioxothianthreniumhexafluoro-phosphat.

Konkrete Beispiele für einsetzbare lodonium-Salze sind Diphenyliodoniumtetrafluoroborat, Di-(4-methylphenyl)-iodoniumtetrafluoroborat, Phenyl-4-methylphenyliodoniumtetrafluoroborat, Di-(4-chlorphenyl)-iodoniumhexafluorophosphat, Dinaphthyliodoniumtetrafluoroborat, Di-(4-trifluormethylphenyl)-iodoniumtetrafluoroborat, Diphenyliodoniumhexafluorophosphat, Di-(4-methylphenyl)-iodoniumhexafluorophosphat, Diphenyliodoniumhexafluoroarsenat, Di-(4-phenoxyphenyl)-iodoniumtetrafluoroborat, Phenyl-2-thienyliodoniumhexafluorophosphat, 3,5-Dimethylpyrazolyl-4-phenyliodoniumhexafluorophosphat, Diphenyliodoniumhexafluoroantimonat, 2,2'-Diphenyliodoniumtetrafluoroborat, Di-(2,4-dichlorphenyl)-iodoniumhexa-fluorophosphat, Di-(4-bromphenyl)-iodoniumhexafluorophosphat, Di-(4-methoxyphenyl)-iodoniumhexafluorophosphat, Di-(3-carboxyphenyl)-iodoniumhexafluorophosphat, Di-(3-methoxycarbonylphenyl)-iodoniumhexafluorophosphat, Di-(3-methoxysulfonylphenyl)-iodoniumhexafluorophosphat, Di-(4-acetamidophenyl)-iodoniumhexafluorophosphat, Di-(2-benzothienyl)-iodoniumhexafluorophosphat, Diaryliodoniumtristrifluormethylsulfonylmethid wie Diphenyliodoniumhexafluoroantimonat, Diaryliodoniumtetrakis-(pentafluorophenyl)-borat wie Diphenyliodoniumtetrakis-(pentafluorophenyl)-borat, [4-(2-Hydroxy-n-tetradesiloxy)-phenyl]-phenyliodoniumhexafluoroantimonat, [4-(2-Hydroxy-n-tetradesiloxy)-phenyl]-pheny-liodoniumtrifluorosulfonat, [4-(2-Hydroxy-n-tetradesiloxy)-phenyl]-phenyliodoniumhexafluoro-phosphat, [4-(2-Hydroxy-n-tetradesiloxy)-phenyl]-phenyliodoniumtetrakis-(pentafluorophenyl)-borat, Bis-(4-tert-butylphenyl)-iodoniumhexafluoroantimonat, Bis-(4-tert-butylphenyl)-iodoniumhexafluorophosphat, Bis-(4-tert-butylphenyl)-iodoniumtrifluorosulfonat, Bis-(4-tertbutylphenyl)-iodoniumtetrafluoroborat, Bis-(dodecylphenyl)-iodoniumhexafluoroantimonat, Bis-(dodecylphenyl)-iodoniumtetrafluoroborat, Bis-(dodecylphenyl)-iodoniumhexafluoro-phosphat, Bis-(dodecylphenyl)-iodoniumtrifluoromethylsulfonat, Di-(dodecylphenyl)-iodoniumhexafluoroantimonat, Di-(dodecylphenyl)-iodoniumtriflat, Diphenyliodoniumbisulfat, 4,4'-Dichlorodiphenyliodoniumbisulfat, 4,4'-Dibromodiphenyliodoniumbisulfat, 3,3'-Dinitrodiphenyliodoniumbisulfat, 4,4'-Dimethyldiphenyliodoniumbisulfat, 4,4'-Bis-succinimidodiphenyliodoniumbisulfat, 3-Nitrodiphenyliodoniumbisulfat, 4,4'-Dimethoxydiphenyliodoniumbisulfat, Bis-(dodecylphenyl)-iodoniumtetrakis-(pentafluorophenyl)-borat, (4-Octyloxyphenyl)-phenyliodoniumtetrakis-(3,5-bis-trifluoromethylphenyl)-borat und (Tolyl-cumyl)-iodoniumtetrakis-(pentafluorophenyl)-borat, und Ferrocenium-Salze (siehe zum Beispiel EP 0 542 716 B1) wie η5-(2,4-cyclopentadien-1-yl)-[(1,2,3,4,5,6,9)-(1-methylethyl)-benzol]-eisen.
Bevorzugt umfasst die Reaktivklebemasse des erfindungsgemäßen reaktiven Haftklebebandes
(Tris(4-(4-acetylphenyl) thiophenyl)sulfoniumtetrakis(pentafluorophenyl)borat als Photoinitiator zur Aushärtung der Epoxidverbindung.

Photoinitiatoren werden typischerweise einzeln aber auch als Kombination von zwei oder mehreren Photoinitiatoren eingesetzt. Beim Einsatz von Photoinitiatoren sind Kombinationen mit sogenannten Sensitizern für die Anpassung der Aktivierungswellenlänge des Photoinitiationssystems an das gewählte Emissionsspektrum sehr hilfreich, für die auf dem Fachmann bekannte Literatur, wie z.B. "Industrial Photoinitiators: A technical guide" 2010 von A.W. Green, verwiesen wird. Typischerweise beträgt in diesen Fällen der Anteil von Photoinitiatoren in der Reaktivklebemasse nicht mehr als 4 Gew.-% aber mindestens 0,1 Gew.-%, und liegt bevorzugt im Bereich von 0,5 Gew.-% bis 2 Gew.-%. Der Anteil von Sensitizern beträgt üblicherweise nicht mehr als 3 Gew.-% und liegt bevorzugt im Bereich von 0,5 Gew.-% bis 2 Gew.-%, jeweils bezogen auf 100 Gew.-% Basismasse.

Die Reaktivklebemasse des erfindungsgemäßen reaktiven Haftklebebands kann gegebenenfalls weitere Additive und/oder Hilfsstoffe enthalten, die im Stand der Technik bekannt sind. Der Anteil der weiteren Additive und/oder Hilfsstoffe kann im Bereich von 0 Gew.-% bis etwa 20 Gew.-%, bevorzugt 0 Gew.-% bis etwa 15 Gew.-%, stärker bevorzugt 0 Gew.-% bis etwa 10 Gew.-%, und am stärksten bevorzugt 0 Gew.-% bis etwa 5 Gew.-% liegen, jeweils bezogen auf 100 Gew.-% der Basismasse.

Als weitere Additive und/oder Hilfsstoffe sind beispielsweise weitere Polymere, reaktive Monomere, Füllstoffe, Farbstoffe, Keimbildner, weitere Photoinitiatoren, rheologische Additive (zum Beispiel pyrogene Kieselsäure), Blähmittel, klebverstärkende Additive (Haftvermittler, insbesondere Silane und Tackifier-Harze), Compoundierungsmittel, Weichmacher und/oder Alterungs-, Licht- und UV-Schutzmittel, zum Beispiel in Form von primären und sekundären Antioxidantien zu nennen.

Insbesondere und gemäß bevorzugter Ausführungsformen beträgt der Anteil an Füllstoffen, wie beispielsweise Glaskugeln oder SiLibeads^{®} 5211, bis zu 50 Gew.-%, insbesondere bis zu 40 Gew.-%, bezogen auf 100 Gew.-% der Basismasse.

Insbesondere bevorzugte Additive sind Silan-Haftvermittlern oder Offenzeitadditive. Als Silanhaftvermittler ist zum Beispiel 3-Trimethoxysilylpropylmethacrylat (CAS-Nr.: 2530-85-0) zu nennen, erhältlich unter dem Handelsnamen Dynasylan^{®} MEMO (Evonik AG, Essen, Deutschland). Geeignete Offenzeitadditive sind Polyethylenglycol 400 (PEG 400) CAS: 25322-68-3 oder Polyethylenglycol 600 (PEG 600) CAS: 25322-68-3.

Als Offenzeitadditiv umfasst die Reaktivklebemasse des erfindungsgemäßen reaktiven Haftklebebands bevorzugt mindestens eine Substanz ausgewählt aus der Gruppe bestehend aus Polyethylenglykol (PEG), Polypropylenglykol (PPG), tertiären Aminen und Kronenethern (wie zum Beispiel 18-Krone-6); insbesondere mindestens eine Substanz ausgewählt aus PEG mit einem gewichtsmittleren Molekulargewicht, ermittelt wie vorstehend hierin beschrieben, von 400 bis 10.000 g/mol, zum Beispiel bis 5.000 g/mol, ganz besonders bevorzugt bis 1.000 g/mol, und insbesondere PEG 600. Diese Substanzen bewirken, dass nach der Initiierung der Härtung der Reaktivklebmassen noch eine so genannte offene Zeit verbleibt, während derer die Härtung noch nicht oder zumindest noch nicht in signifikantem Ausmaß einsetzt, und lassen sich daher als "Offenzeitadditiv" bezeichnen. Wie sich gezeigt hat, lassen sich mit den hier aufgeführten Offenzeitadditive insbesondere für UV-härtbare Reaktivklebmassen offene Zeiten von wenigstens einer Minute, häufig von 1 bis 5 Minuten erreichen, wobei die Dunkelreaktion bei einer Temperatur von 25 °C nach 24 Stunden abgeschlossen ist. Eine Reaktion im Sinne dieser Erfindung wird als "abgeschlossen" bezeichnet, wenn die Verklebungsfestigkeit des reaktiven Haftklebebandes nach 24h wenigstens 2 MPa beträgt.

Die Reaktivklebmasse kann grundsätzlich ein oder mehrere Offenzeitadditive umfassen. Die vorstehend genannten Offenzeitadditive sind, sofern umfasst, in der Reaktivklebmasse bevorzugt zu 0,1 Gew.-% bis 10 Gew.-%, stärker bevorzugt zu 0,2 Gew.-% bis 5 Gew.-%, insbesondere zu 0,3 Gew.-% bis 4 Gew.-%, jeweils bezogen auf 100 Gew.-% der Basismasse, enthalten.

Das erfindungsgemäße reaktive Haftklebeband umfasst mindestens eine Reaktivklebemasse. In einer bevorzugten Ausführungsform liegt die mindestens eine Reaktivklebemasse als Klebeschicht vor. In diesem Fall betrifft das erfindungsgemäße reaktive Haftklebeband ein Klebeband bzw. Klebefilm ohne Trägerschicht, also als ein trägerloses (geschäumte und ungeschäumte) reaktives Transferhaftklebeband. In einer bevorzugten Ausführungsform ist das reaktive Haftklebeband dadurch gekennzeichnet, dass das Haftklebeband neben der Klebeschicht noch eine Trägerschicht umfasst. Dies beinhaltet einseitige Klebebänder als auch doppelseitige Klebebänder umfassend mindestens eine äußere Schicht bestehend aus der erfindungsgemäßen Reaktivklebemasse, wie in den Ansprüchen definiert.

Der Begriff Klebeband ist für den Fachmann im Bereich der Klebetechnik klar. Im Rahmen der vorliegenden Erfindung bezeichnet der Ausdruck Band alle dünnen, flächigen Gebilde, d.h. Gebilde mit einer überwiegenden Ausdehnung in zwei Dimensionen, insbesondere Folien, Folienabschnitte und Etiketten, bevorzugt Bänder mit ausgedehnter Länge und begrenzter Breite sowie entsprechende Bandabschnitte.

Die Trägerschicht bezeichnet zumeist die Schicht eines solchen mehrschichtigen Klebebandes, die die mechanischen und physikalischen Eigenschaften des Klebebandes, wie beispielsweise die Reißfestigkeit, Dehnbarkeit, Isolations- oder Rückstellvermögen, maßgeblich bestimmt. Übliche Trägermaterialien sind dem Fachmann geläufig und sind beispielsweise Gewebe, Gelege und Kunststofffolien, zum Beispiel PET-Folien und Polyolefin-Folien. Die Trägerschicht kann jedoch auch selbst haftklebrig sein.

In den erfindungsgemäßen reaktiven Haftklebebändern können die Klebeschichten mit einem sogenannten Releaseliner für Transport, Lagerung oder Stanzung abgedeckt sein. Dieser Releaseliner ermöglicht zum Beispiel ein problemloses Abwickeln und schützt die Haftklebemasse vor Verschmutzung. Solche Releaseliner bestehen üblicherweise aus einer ein- oder beidseitig silikonisierten Kunststofffolie (z.B. PET oder PP) oder einem silikonisierten Papierträger.

Die Schichtdicke der Klebeschicht aus der Reaktivklebemasse im erfindungsgemäßen reaktiven Haftklebeband beträgt bevorzugt 5 µm bis 400 µm (gemessen mit einem handelsüblichen Dickenmessgerät, z.B. DM 2000 der Firma Wolf Messtechnik GmbH). Bevorzugter ist eine Schichtdicke von 10 µm bis 300 µm, noch bevorzugter ist eine Schichtdicke von 30 µm bis 200 µm und am stärksten bevorzugt ist eine Schichtdicke von 50 µm bis 110 µm. Höhere Schichtdicken, z.B. von bis zu 1000 µm, sind denkbar und mit der Reaktivklebemasse der vorliegenden Erfindung realisierbar. Dies ist vor allem der Fall, wenn Bauteile mit größeren Spaltmaßen verbaut werden. Bevorzugte Schichtdicken sind hier bis zu 1000 µm, bevorzugter bis zu 900 µm und stärker bevorzugter von bis zu 800 µm. Häufig werden solche Klebebänder zur Sicherstellung der inneren Festigkeit vor Aushärtung mit einer Trägerschicht im Inneren versehen, sodass in Ausnahmen eine beidseitige Aktivierung nötig werden kann.

Offenbart wird ausgehend vom erfindungsgemäßen reaktiven Haftklebeband zudem die Verwendung des erfindungsgemäßen reaktiven Haftklebebandes zur Verklebung von zwei oder mehr Komponenten bzw. Substraten, bevorzugt bei Raumtemperatur, durch Aushärtung der Reaktivklebemasse.

Das erfindungsgemäße Verfahren zur Verklebung zweier Substrate, bevorzugt bei Raumtemperatur, unter Verwendung des erfindungsgemäßen reaktiven Haftklebebandes umfasst die folgenden Schritte
A) Aufbringen des reaktiven Haftklebebands auf ein erstes Substrat
B) Aktivierung des reaktiven Haftklebebands durch Bestrahlung mit UV-Licht, bevorzugt von einer UV-LED Lampe.
C) Fügen eines zweiten Substrates auf das aktivierte reaktive Haftklebeband.

Bevorzugt wird in diesem Verfahren mit einer Wellenlänge von 365 nm oder 385 nm, bevorzugter mit 365 nm, bestrahlt. Entsprechende UV-LED Lampen sind im Fachhandel erhältlich, zum Beispiel der LED Cube der Firma Hönle (Dr. Hönle AG, Gilching, Deutschland). Weiterhin kann das erfindungsgemäße Verfahren dadurch gekennzeichnet werden, dass die Aktivierung weniger als 45 Sekunden, bevorzugt weniger als 30 Sekunden, bevorzugter weniger als 15 Sekunden, noch bevorzugter weniger als 10 Sekunden, insbesondere weniger als 7 Sekunden, dauert. Insbesondere hat sich in diesem Verfahren eine Aktivierungs- / Bestrahlungszeit von weniger als 15 Sekunden oder 10 Sekunden als hervorragend geeignet herausgestellt und diese sind besonders vorteilhaft, weil sie sehr kurze Taktzeiten im industriellen Prozess ermöglichen.

Ein weiterer Gegenstand der Erfindung ist die Verwendung des erfindungsgemäßen reaktiven Haftklebebandes als Klebemittel in der Herstellung elektronischer, optischer oder feinmechanischer Geräte, insbesondere portabler elektronischer, optischer oder feinmechanischer Geräte.

Derartige portable Geräte sind insbesondere:
Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems;
Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads");
Monitore, Displays, Bildschirme, berührungsempfindliche Bildschirme (Sensorbildschirme, "Touchscreen-Geräte"), Beamer;
Lesegeräte für elektronische Bücher ("E-Books");
Kleinfernsehgeräte, Taschenfernseher, Filmabspielgeräte, Videoabspielgeräte Radios (auch Klein- und Taschenrundfunkgeräte), Walkmen, Discmen, Musikabspielgeräte für zum Beispiel CD, DVD, Bluray, Kassetten, USB, MP3, Kopfhörer Schnurlose Telefone, Mobiltelefone, Smartphones, Funksprechgeräte, Freisprechgeräte, Personenrufgeräte (Pager, Pieper);
Mobile Defibrillatoren, Blutzuckermessgeräte, Blutdruckmessgeräte, Schrittzähler, Pulsmesser;
Taschenlampen, Laserpointer;
Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation;
Datenspeichergeräte (USB-Sticks, externe Festplatten, Speicherkarten); und Armbanduhren, Digitaluhren, Taschenuhren, Kettenuhren, Stoppuhren.

### Experimenteller Teil:

### A. Verwendete Rohstoffe:

| | |
|---|---|
| 2-Phenoxyethylacrylat (PEA) | CAS Nr. 48145-04-6, Monomer Poly(meth)acrylat |
| | BASF |
| Benzylacrylat (BzA) | CAS Nr. 2495-35-4, Monomer Poly(meth)acrylat |
| | KOWA Europe GmbH |
| Benzylmethylacrylat (BzMA) | CAS Nr. 2495-37-6, Monomer Poly(meth)acrylat |
| | Evonik Industries AG |
| 2-Phenoxyethylmethacrylat (PEMA) | CAS Nr. 10595-06-9, Monomer Poly(meth)acrylat |
| | Sigma-Aldrich |
| Methylmethacrylat (MMA) | CAS Nr. 80-62-6, Monomer Poly(meth)acrylat |
| | Sigma-Aldrich |
| n-Butylacrylat (BA) | CAS Nr. 141-32-2, Monomer Poly(meth)acrylat |
| | BASF |
| Methylacrylat (MA) | CAS Nr. 96-33-3, Monomer Poly(meth)acrylat |
| | BASF |
| 2,2'-Azobis(2-methylbutryronitril) | CAS Nr. 13472-08-7, Polymerisationsinitiator |
| | Akzo Nobel |
| Di(4-tert-5-butylcyclohexyl)peroxy-dicarbonat | CAS Nr. 15520-11-3, Polymerisationsinitiator |
| | Akzo Nobel |
| Kurarity LA3320 | Acrylat-Triblockcopolymer der Firma Kuraray bestehend aus Butylacrylat im Mittelblock und Methylmethacrylat im Hardblock. |
| D.E.R.331 | Flüssiger Bisphenol-A-Diglycidylether der Firma Olin mit einem EEW von 182 - 192 g/eq und einer Viskosität von ∼12 Pa s gemessen bei 23°C. |
| D.E.R.662 | Fester Bisphenol-A-Diglycidylether der Firma Olin mit einem EEW von 590 - 630 g/eq und einer mit DSC gemessenen Glastemperatur von ∼46°C |
| Eponex 1510 | Flüssiger hydrierter Bisphenol-A-Diglycidylether der Firma Hexion mit einem EEW von 205 - 215 g/eq und einer Viskosität von ∼18 - 25 Pa s gemessen bei 23°C. |
| Irgacure PAG 290 | (Tris(4-(4-acetylphenyl) thiophenyl) sulfonium tetrakis (pentafluorophenyl) borat, von der Firma BASF |
| PEG 600 | Aldrich, CAS Nr. 25322-68-3, Offenzeitadditiv, Sigma-Aldrich |

### B. Herstellung der Poly(meth)acrylate:

**Tabelle 1 - Zusammensetzung der Poly(meth)acrylate und Vergleichspolymere**

| **Name** | **Monomerzusammensetzung** | **Gesamtanteil der Monomere (i)** | **Molekulargewicht Mw [g/mol]** |
|---|---|---|---|
| P1 | 100 Gew.-% PEA | 100 % | 1.500.000 |
| P2 | 100 Gew.-% BzA | 100 % | 1.500.000 |
| P3 | 80 Gew.-% PEA | 100 % | 1.650.000 |
| | 20 Gew.-% BzMA | | |
| P4 | 77 Gew.-% PEA | 100 % | 1.150.000 |
| | 23 Gew.-% PEMA | | |
| P5 | 69 Gew.-% PEA | 69% | 1.000.000 |
| | 31 Gew.-% MMA | | |
| VP1 | 29 Gew.-% PEA | 29 % | 700.000 |
| | 51 Gew.-% BA | | |
| | 20 Gew.-% MA | | |
| VP2 | Kurarity LA3320 | 0 % | ~ 100.000 |

Die Polymere P1 bis P5 und VP1 wurden folgendermaßen hergestellt.

Ein für radikalische Polymerisationen konventioneller 4 L-Reaktor wurde mit 320 g der in Tabelle 1 angegebenen Mischung aus Monomeren sowie 273 g Ethylacetat/Isopropanol (96/04) befüllt. Nach 45-minütiger Durchleitung von Stickstoffgas unter Rühren wurde der Reaktor auf 58 °C hochgeheizt und 0,2 g 2,2'-Azobis(2-methylbutryronitril) hinzugegeben. Weitere 480 g der in Tabelle 1 angegebenen Monomermischung und 377 g Ethylacetat wurden 2 Stunden lang kontinuierlich zugegeben. Anschließend wurde das äußere Heizbad auf 65 °C erwärmt und die Reaktion konstant bei dieser Außentemperatur durchgeführt. Nach 1 h und nach 1,5 h Reaktionszeit wurden jeweils 0,3 g und 0.3 g 2,2'-Azobis(2-methylbutryonitril) hinzugegeben. Zur Reduktion der Restmonomeren wurden nach 6 h und nach 7,5 h jeweils 0,12 g Di(4-tert-5-butylcyclohexyl)peroxydicarbonat hinzugegeben. Es wurde einmal nach 2 h und 4 h mit 160 g Ethylacetat verdünnt. Die Reaktion wurde nach 24 h Reaktionszeit abgebrochen und auf Raumtemperatur abgekühlt.

### C. Herstellung der Reaktivklebemasse:

Die Herstellung der Reaktivklebemassen erfolgte im Labor gemäß den Mengenangaben in der untenstehenden Tabelle 2. Zu dem in Lösungsmittel vorliegenden Polymer wurden die Epoxidverbindungen und im Anschluss daran wurde der Photoinitiator mittels Rührens zugegeben.

**Tabelle 2 - Zusammensetzung der erfindungsgemäßen Reaktivklebemassen (alle Angaben in Gewichtsteilen):**

| Komponenten | **K1** | **K2** | **K3** | **K4** | **K5** | **K6** | **K7** | **K8** | **K9** | **K10** |
|---|---|---|---|---|---|---|---|---|---|---|
| **Basismasse** | | | | | | | | | | |
| P1 | 45 | | | | | | | | | |
| P2 | | 35 | 45 | | | | 45 | | | |
| P3 | | | | 35 | 45 | | | | | |
| P4 | | | | | | | | 55 | 65 | |
| P5 | | | | | | 45 | | | | 25 |
| D.E.R.331 | 17 | 20 | 17 | 20 | 17 | 17 | 38 | 14 | 11 | 11 |
| D.E.R.662 | 17 | 20 | 17 | 20 | 17 | 17 | 17 | 14 | 11 | 34 |
| Eponex 1510 | 21 | 25 | 21 | 25 | 21 | 21 | | 17 | 13 | 30 |

| **Weitere Bestandteile** | | | | | | | | | | |
|---|---|---|---|---|---|---|---|---|---|---|
| Irgacure PAG290 | 0,5 | 0,5 | 0,5 | 0,5 | 0,5 | 0,5 | 0,5 | 0,5 | 0,5 | 0,5 |
| PEG 600 | 1 | 1 | 1 | 1 | 1 | 1 | 1 | 1 | 1 | 1 |

**Tabelle 3 - Zusammensetzung der Vergleichs-Reaktivklebemassen (alle Angaben in Gewichtsteilen):**

| **Komponenten** | **V1** | **V2** | **V3** | **V4** |
|---|---|---|---|---|
| P1 | | | 20 | |
| VP1 | 45 | | | 65 |
| VP2 | | 45 | | |
| D.E.R.331 | | 17 | 30 | 5 |
| D.E.R.662 | 34 | 17 | 29 | 10 |
| Eponex 1510 | 21 | 25 | 21 | |
| Uvacure 1500 | | | | 20 |
| Irgacure PAG290 | 0,5 | 0,5 | 0,5 | 0,5 |
| PEG 600 | 1 | 1 | 1 | 1 |

### C. Herstellung der reaktiven Haftklebebänder:

Zur Herstellung der reaktiven Klebemasseschichten, also der trägerlosen Haftklebebänder, wurden die verschiedenen reaktiven Klebemassen aus einer Lösung auf einen konventionellen Liner (silikonisierte Polyesterfolie) mittels eines Laborstreichgeräts aufgebracht und getrocknet. Die Größe der Klebemassenschicht betrug ungefähr 21 cm x 30 cm und die Klebmassenschichtdicke nach dem Trocknen beträgt 100 ± 5 µm. Die Trocknung erfolgte jeweils zunächst bei RT für 15 Minuten und 15 Minuten bei 120 °C in einem Labortrockenschrank. Die getrockneten Klebemasseschichten wurden jeweils unverzüglich nach dem Trocknen mit einem zweiten Liner (silikonisierte Polyesterfolie mit geringerer Trennkraft) auf der offenen Seite laminiert.

### D. Prüfmethoden und Test-Ergebnisse

### Push-Out (PC-PC) - initial:

Der Push-Out-Test ermöglicht Aussagen über die Verklebungsfestigkeit eines Klebeprodukts in Richtung der Klebschichtnormalen. Bereitgestellt werden ein kreisförmiges erstes Substrat (1) (Polycarbonat, Macrolon 099, Dicke 3 mm) mit einem Durchmesser von 21 mm, ein quadratisches zweites Substrat (2) (Polycarbonat, Macrolon 099, Dicke 3 mm) mit 40 mm Seitenlänge - mit einer kreisförmigen, zentral angeordneten Öffnung (Bohrung) von 9 mm Durchmesser, sowie die zu untersuchenden Klebefilmprobe, die ringförmig mit einem Außendurchmesser von 18 mm und einem Innendurchmesser von 13 mm gestanzt wurde, so dass ein Ring mit einer Stegbreite von 5 mm entstand.

Aus den vorgenannten drei Bauteilen wird ein Prüfkörper hergestellt, indem das Klebeprodukt mit der freien Oberfläche mittig auf das Substrat (1) verklebt wird. Dann wird die temporäre Schutzfolie (silikonisierter PET-Liner) entfernt und mit mindestens 4500 mJ/cm² einer 365 nm UV-LED (Hönle AG) aktiviert. Dieser Verbund wird mit der nun freiliegenden Seite des Klebeproduktes innerhalb von 2 Minuten auf das Substrat (2) konzentrisch appliziert, also derart, dass die kreisrunde Aussparung des Substrats (2) genau mittig über dem kreisrunden ersten Substrat 1 angeordnet ist (Verklebungsfläche ist somit 151 mm²) und mit einem Druck von mindestens 10 bar für mindestens 10 Sekunden verpresst, wobei der Prüfkörper entsteht.

Nach dem Verpressen werden die Prüfkörper für 72 Stunden bei 23 °C / 50 % relativer Feuchte (r.F.) konditioniert. Nach der Lagerung wird der Klebeverbund in eine Probenhalterung gespannt, so dass der Verbund waagerecht ausgerichtet ist. Der Prüfkörper wird mit der Polycarbonatscheibe (Substrat (1)) nach unten in die Probenhalterung eingelegt und in einer Zwick [Z020] die Verklebungsfestigkeit gemessen. Dazu wird ein Stahlstempel mit einem Durchmesser von 7 mm durch die kreisförmige Öffnung in Substrat (2) gefahren und die Kraft bestimmt, die benötigt wird das kreisförmige Substrat (1) vom quadratischen Substrat (2) zu trennen. Als Ausgabewert wird die bestimmte Kraft durch die Verklebungsfläche geteilt und die Kraft in MPa angegeben.

Es werden drei Proben pro Produkt getestet und der Mittelwert als Kennzahl für die Verklebungsfestigkeit angegeben.

### Push-Out (PC-PC) - nach 72h bei 65°C in Isopropanol/Wasser:

Zur Bestimmung der chemischen Beständigkeit der Verklebung wurden Push-Out Prüfkörper, die wie weiter oben beschrieben, aufgebaut sind, für 72 h in ein 65 °C warmes Bad aus Isopropanol/Wasser (70/30, d.h. 70 % Volumenanteile zu 30 % Volumenanteile) gelegt. Nach der Entnahme wurden die Testkörper bei 23 °C und 50 % r.F. für eine Stunde reklimatisiert. Danach erfolgte die Messung der Verklebungsfestigkeit, wie unter Push-Out - initial beschrieben.

Zur Bestimmung der Verklebungsfestigkeit auf Aluminium wurden als Substrat (1) eine 1 mm dicke kreisrunde Aluminiumscheibe (Durchmesser 21 mm) und als Substrat (2) ein 2 mm dickes quadratförmiges Aluminiumsubstrat mit 40 mm Seitenlänge und mit einer kreisförmigen, zentral angeordneten Öffnung (Bohrung) von 9 mm Durchmesser gewählt. Die Aluminiumsubstrate sind eloxierte E6 EV1 (Legierung 5005A [AIMg1]).

Zur Bestimmung der Verklebungsfestigkeit auf SUS wurden als Substrat (1) eine 3 mm dicke kreisrunde Stahlscheibe (Durchmesser 21 mm) und als Substrat (2) ein 2 mm dickes quadratförmiges Stahlsubstrat mit 40 mm Seitenlänge und mit einer kreisförmigen, zentral angeordneten Öffnung (Bohrung) von 9 mm Durchmesser gewählt. Die Stahlsubstrate sind aus VA-1.4301 Stahl (einseitig spiegelpoliert).

### Klebkraft (auf Stahl):

Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 µm verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergibt sich als Mittelwert aus drei Einzelmessungen.

**Tabelle 4 - Ergebnisse Push-Out und Klebkraft**

| **Test** | **K1** | **K2** | **K3** | **K4** | **K5** | **K6** | **K7** |
|---|---|---|---|---|---|---|---|
| Push-Out (PC-PC) - initial [MPa] | 3,1 | 3,3 | 4,1 | 3,1 | 2,7 | 2,8 | 4,2 |
| Push-Out (PC-PC) - nach 72h @65°C in Isopropanol/Wasser [MPa] | 1,6 | 0,7 | 1,0 | 1,7 | 2,3 | 1,2 | 1,9 |
| Klebkraft Stahl | AF, >1 N/cm | AF, >1 N/cm | AF, >1 N/cm | AF, >1 N/cm | AF, >1 N/cm | AF, >1 N/cm | AF, >1 N/cm |
| | | | | | | | |

| **Test** | **K8** | **K9** | **K10** | **V1** | **V2** | **V3** | **V4** |
|---|---|---|---|---|---|---|---|
| Push-Out (PC-PC) - initial [MPa] | 3,7 | 3,6 | 1,25 | 2,7 | 4,6 | n.b.1 | 2,9 |
| Push-Out (PC-PC) - nach 72h @65°C in Isopropanol / Wasser [MPa] | 0,2 | 0,1 | 0,11 | n.b.2 | n.b.2 | n.b.1 | n.b.2 |
| Klebkraft (auf Stahl) | AF, >1 N/cm | AF, >1 N/cm | AF, >1 N/cm | AF, >1 N/cm | AF, >1 N/cm | KF, kein PSA | AF, >1 N/cm |

| | | | | | | | |
|---|---|---|---|---|---|---|---|
| *Abkürzunaserklärung:* *AF* = *adhäsives Versagen; KF* = *kohäsives Versagen.* *n.b.1* = *nicht bestimmbar. Klebmasse war sehr weich, so dass keine Ronden für den Push-Out Test verklebt werden konnten.* *n.b.2* = *Die Verklebung löste sich entweder bereits nach 48 Stunden Lagerzeit in Isopropanol* / *Wasser auf oder bei der Vorbereitung der Proben für die Push-Out Tests. Daher kann der Push-Out Test nach 72 Stunden Lagerung in Isopropanol* / *Wasser nicht durchgeführt werden.* | | | | | | | |

Alle erfindungsgemäße Klebemassen K1 bis K11 zeigen hervorragende initiale Verklebungsfestigkeiten (Push-Out). Auch nach Immersion in einer Mischung aus Isopropanol und Wasser für 72 Stunden sind die Verklebungsfestigkeiten noch ausreichend hoch bzw. ausgezeichnet, so dass die erfindungsgemäßen Klebemassen K1 bis K11 ein gute bis sehr gut chemische Beständigkeit aufweisen. Die Vergleichsklebmasse V3 war nicht haftklebrig und es konnte keine initiale Verklebungsfestigkeit bestimmt werden. Die Vergleichsklebemassen V1, V2 und V4 wiesen zwar akzeptable initiale Verklebungsfestigkeiten im Push-Out Test auf, zeigten jedoch keine chemische Beständigkeit, da die Verklebungen bereits während der Immersionszeit in der Mischung aus Isopropanol und Wasser oder spätestens bei der Probenvorbereitung der Push-Out Tests nach der Entnahme aus der Mischung versagten.

Überraschenderweise zeigte sich beim Vergleich von K3 zu K7, wie in Tabelle 5 dargestellt, dass es für die Verklebung auf Al-Al Substraten und auch auf SUS-SUS von Vorteil sein kann Teile der flüssigen Epoxidverbindung gegen hydrierte Epoxidverbindungen zu tauschen. So zeigt K7 zwar auf PC als Substrat eine leicht bessere chemische Beständigkeit, aber auf AI als Substrat (2,5 MPa, initial) im Vergleich zu 3,1 MPa bei K3 niedrigere Werte. Insbesondere nach Lagerung in Isopropanol/Wasser zeigt sich der positive Einfluss der hydrierten Epoxidverbindung auf die chemische Beständigkeit. So sind die Werte auf Al-Al (0,3 MPa) und SUS-SUS (0,6 MPa) bei K3 signifikant höher als die 0,1 MPa auf AI und SUS von K7.

**Tabelle 5 - Ergebnisse Push-Out (in [MPa] von K3 und K8 für PC-PC, Al-Al und SUS-SUS**

| **Test** | **K3** | **K7** |
|---|---|---|
| Push-Out (PC-PC) - initial | 4,1 | 4,2 |
| Push-Out (PC-PC) - nach 72h @65°C in Isopropanol/Wasser | 1,0 | 1,9 |
| Push-Out (AI-AI) - initial | 3,1 | 2,5 |
| Push-Out (AI-AI) - nach 72h @65°C in Isopropanol/Wasser | 0,3 | 0,1 |
| Push-Out (SUS-SUS) - initial | 9,3 | 10,1 |
| Push-Out (SUS-SUS) - nach 72h @65°C in Isopropanol/Wasser | 0,6 | 0,1 |

## Patentansprüche

1. Reaktives Haftklebeband umfassend mindestens eine Reaktivklebemasse enthaltend eine Basismasse, wobei die Basismasse
(a) 35 Gew.-% bis 80 Gew.-% mindestens eines Poly(meth)acrylats, und
(b) 20 Gew.-% bis 65 Gew.-% mindestens einer Epoxidverbindung, enthält,
wobei die Gesamtmenge an Poly(meth)acrylaten und Epoxidverbindungen in der Basismasse 100 Gew.-% ergibt;
und wobei die Reaktivklebemasse zusätzlich
(c) 0,1 Gew.-% bis 5 Gew.-%, bezogen auf 100 Gew.-% der Basismasse, mindestens eines Initiators, insbesondere Photoinitiators, zur Aushärtung der Epoxidverbindung umfasst;
**dadurch gekennzeichnet, dass**
das Poly(meth)acrylat (a) auf eine Monomerzusammensetzung zurückzuführen ist, die
(i) 55 Gew.-% bis 100 Gew.-% eines oder mehrerer Monomere ausgewählt aus der Gruppe bestehend aus
a. einem oder mehreren Monomeren der Formel (I) 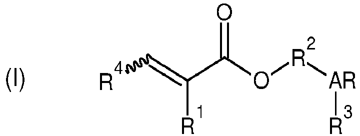
worin R¹ für ein Wasserstoffatom oder eine Methylgruppe,
R² für eine unsubstituierte, lineare oder verzweigte C₁-C₂₂-Alkylkette,
AR für einen aromatischen Rest,
R³ für H, eine unsubstituierte, lineare oder verzweigte C₁-C₅-Alkylkette, eine Hydroxygruppe, C₁-C₁₀-Alkoxygruppe oder Aryloxygruppe,
R⁴ für H oder einen Phenylring steht,
b. einem oder mehreren Monomeren der Formel (II) 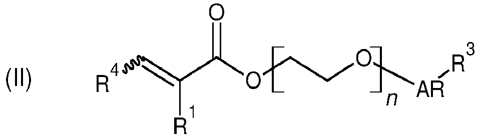
worin R¹ für ein Wasserstoffatom oder eine Methylgruppe,
AR für einen aromatischen Rest,
R³ für H, eine unsubstituierte, lineare oder verzweigte C₁-C₅-Alkylkette, eine Hydroxygruppe, C₁-C₁₀-Alkoxygruppe oder Aryloxygruppe, und
R⁴ für H oder einen Phenylring steht, und n = 0 bis 10 ist,
c. Styrol, und
d. Methylstyrol; und
(ii) 0 Gew.-% bis 45 Gew.-% eines oder mehrerer Comonomere,
wobei das Comonomer oder die Comonomere ausgewählt sind aus der Gruppe der (Meth)acrylat-Monomere und copolymerisierbaren Vinylmonomeren, und
wobei das Comonomer oder die Comonomere nicht den Monomeren der Formel (I), den Monomeren der Formel (II), Styrol und Methylstyrol entsprechen,
umfasst oder daraus besteht, wobei die Gewichtsanteile jeweils auf das Gesamtgewicht der Monomerzusammensetzung bezogen sind.

2. Reaktives Haftklebeband nach Anspruch 1, **dadurch gekennzeichnet, dass** das Poly(meth)acrylat auf eine Monomerzusammensetzung zurückzuführen ist, die
(i) 55 Gew.-% bis 100 Gew.-% eines oder mehrere Monomere ausgewählt aus der Gruppe bestehend aus
a. einem oder mehreren Monomeren der Formel (la) 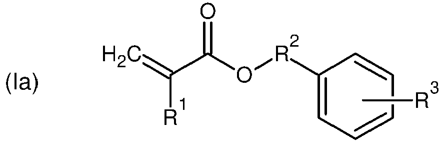
worin R¹ für ein Wasserstoffatom oder eine Methylgruppe,
R² für eine unsubstituierte, lineare oder verzweigte C₁-C₂₂-Alkylkette, und
R³ für H, eine unsubstituierte, lineare oder verzweigte C₁-C₅-Alkylkette, eine Hydroxygruppe, C₁-C₁₀-Alkoxygruppe oder Aryloxygruppe steht, und
b. ein oder mehrere Monomere der Formel (IIa) 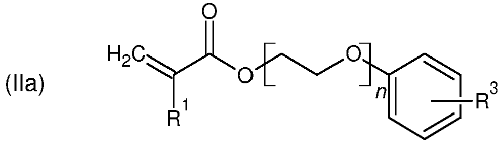
worin R¹ für ein Wasserstoffatom oder eine Methylgruppe,
R³ für H, eine unsubstituierte, lineare oder verzweigte C₁-C₅-Alkylkette, eine Hydroxygruppe, C₁-C₁₀-Alkoxygruppe oder Aryloxygruppe steht, und n = 0 bis 10 ist; und
(ii) 0 Gew.-% bis 45 Gew.-% eines oder mehrerer Comonomere,
wobei das Comonomer oder die Comonomere ausgewählt sind aus der Gruppe der (Meth)acrylat-Monomere, und
wobei das Comonomer oder die Comonomere nicht den Monomeren der Formel (la), den Monomeren der Formel (IIa), Styrol und Methylstyrol entsprechen, umfasst oder daraus besteht, wobei die Gewichtsanteile jeweils auf das Gesamtgewicht der Monomerzusammensetzung bezogen sind.

3. Reaktives Haftklebeband nach Anspruch 1 oder Anspruch 2, **dadurch gekennzeichnet, dass** das Poly(meth)acrylat auf eine Monomerzusammensetzung zurückzuführen ist, die
(i) 55 Gew.-% bis 100 Gew.-% eines oder mehrerer Monomere ausgewählt aus der Gruppe bestehend aus
a. einem oder mehreren Monomeren der Formel (la) 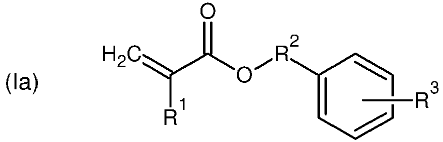
worin R¹ für ein Wasserstoffatom oder eine Methylgruppe,
R² für eine unsubstituierte, lineare oder verzweigte C₁-C₂₂-Alkylkette, und
R³ für H, eine unsubstituierte, lineare oder verzweigte C₁-C₅-Alkylkette, eine Hydroxygruppe, C₁-C₁₀-Alkoxygruppe oder Aryloxygruppe steht, und
b. einem oder mehreren Monomeren der Formel (Ila) 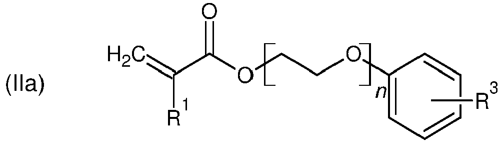
worin R¹ für ein Wasserstoffatom oder eine Methylgruppe,
R³ für H, eine unsubstituierte, lineare oder verzweigte C₁-C₅-Alkylkette, eine Hydroxygruppe, C₁-C₁₀-Alkoxygruppe oder Aryloxygruppe steht, und n = 0 bis 10 ist; und
(ii) 0 Gew.-% bis 45 Gew.-% eines oder mehrerer Comonomere,
wobei das Comonomer oder die Comonomere ausgewählt sind aus der Gruppe der (Meth)acrylat-Monomere,
wobei das Comonomer oder die Comonomere nicht den Monomeren der Formel (la), den Monomeren der Formel (IIa), Styrol und Methylstyrol entsprechen, und
wobei der T_{g} eines Homopolymers des jeweiligen Comonomeren größer als 0 °C, insbesondere größer als 10 °C ist,
umfasst oder daraus besteht, wobei die Gewichtsanteile jeweils auf das Gesamtgewicht der Monomerzusammensetzung bezogen sind.

4. Reaktives Haftklebeband nach einem der Ansprüche 1 bis 3, wobei die Monomere (i) ausgewählt sind aus der Gruppe bestehend aus Benzylacrylat, Phenylacrylat, Benzylmethylacrylat, Phenylmethacrylat, 2-Phenoxyethylacrylat und 2-Phenoxyethylmethacrylat.

5. Reaktives Haftklebeband nach einem der Ansprüche 1 bis 4, **dadurch gekennzeichnet, dass** die mindestens eine Reaktivklebemasse als Basismasse
(a) 40 Gew.-% bis 70 Gew.-%, bevorzugter 45 Gew.-% bis 65 Gew.-%, mindestens eines Poly(meth)acrylats, und
(b) 30 Gew.-% bis 60 Gew.-%, bevorzugter 35 Gew.-% bis 55 Gew.-%, mindestens einer Epoxidverbindung,
enthält, wobei die Gesamtmenge aller enthaltenen Poly(meth)acrylate und Epoxidverbindungen 100 Gew.-% ergibt,
und wobei die Reaktivklebemasse zudem
(c) 0,1 Gew.-% bis 3 Gew.-%, bevorzugter 0,1 Gew.-% bis 2 Gew.-% mindestens eines Initiators, insbesondere Photoinitiators, zur Aushärtung der Epoxidverbindung, bezogen auf 100 Gew.-% der Basismasse, umfasst.

6. Reaktives Haftklebeband nach einem der Ansprüche 1 bis 5,
**dadurch gekennzeichnet, dass**
die Basismasse der Reaktivklebemasse mindestens eine flüssige Epoxidverbindung (b1) und mindestens eine feste Epoxidverbindung (b2) umfasst.

7. Reaktives Haftklebeband nach Anspruch 6,
wobei in der Reaktivklebemasse das Gewichtsverhältnis der Gesamtheit der flüssigen Epoxidverbindungen (b1) zur Gesamtheit der festen Epoxidverbindungen (b2) 1 : 2 bis 5 : 1, und stärker bevorzugt 1,5 : 1 bis 3 : 1, beträgt.

8. Reaktives Haftklebeband nach einem der Ansprüche 1 bis 7,
**dadurch gekennzeichnet, dass**
die mindestens eine Epoxidverbindung ausgewählt ist aus der Gruppe bestehend aus cycloaliphatischen Epoxidharzen, wie 3,4-Epoxycyclohexylmethyl-3',4'-epoxycyclohexan-carboxylat, Bisphenol-A-Diglycidylether (BADGE) Harzen, hydrierten Bisphenol-A-Diglycidylether (BADGE) Harzen, epoxy-terminierten Nitrilkautschuken (ETBN) und epoxy-terminierten Butadienkautschuken (EBN), besonders bevorzugt aus der Gruppe bestehend aus Bisphenol-A-Diglycidylethern und hydrierten Bisphenol-A-Diglycidylethern.

9. Reaktives Haftklebeband nach einem der Ansprüche 1 bis 8,
**dadurch gekennzeichnet, dass** die mindestens eine Reaktivklebemasse als Klebeschicht vorliegt.

10. Reaktives Haftklebeband nach Anspruch 9,
**dadurch gekennzeichnet, dass** das Haftklebeband neben der Klebeschicht noch eine Trägerschicht umfasst.

11. Verfahren zur Verklebung zweier Substrate unter Verwendung eines reaktiven Haftklebebandes einem der Ansprüche 1 bis 10 umfassend die Schritte
A) Aufbringen des reaktiven Haftklebebands auf ein erstes Substrat
B) Aktivierung des reaktiven Haftklebebands durch Bestrahlung mit UV-Licht, bevorzugt von einer UV-LED Lampe.
C) Fügen eines zweiten Substrates auf das aktivierte reaktive Haftklebeband.

12. Verfahren nach Anspruch 11,
**dadurch gekennzeichnet, dass** die Aktivierung weniger als 45 Sekunden, bevorzugt weniger als 30 Sekunden dauert.

13. Verwendung eines reaktiven Haftklebebandes nach einem der Ansprüche 1 bis 10 als Klebemittel in der Herstellung elektronischer, optischer oder feinmechanischer Geräte.
